Europäisches Patentamt

European Patent Office

Office européen des brevets

(11) Veröffentlichungsnummer: **0 281 646 B1**

## (12) EUROPÄISCHE PATENTSCHRIFT

(45) Veröffentlichungstag der Patentschrift: **05.02.92**

(21) Anmeldenummer: **87103357.7**

(22) Anmeldetag: **09.03.87**

(51) Int. Cl.⁵: **A47J 27/09**, A47J 27/092

54 **Dampfdruckkochgefäss.**

(43) Veröffentlichungstag der Anmeldung:
**14.09.88 Patentblatt 88/37**

(45) Bekanntmachung des Hinweises auf die
Patenterteilung:
**05.02.92 Patentblatt 92/06**

(84) Benannte Vertragsstaaten:
**AT CH DE FR GB IT LI NL**

(56) Entgegenhaltungen:
EP-A- 0 008 465      EP-A- 0 123 197
DE-A- 2 854 840      DE-A- 3 223 142
US-A- 2 483 297      US-A- 2 614 723
US-A- 2 614 724

(73) Patentinhaber: **WÜRTTEMBERGISCHE METALL-
WARENFABRIK AG.
Postfach 76
W-7340 Geislingen/Steige(DE)**

(72) Erfinder: **Krejza, Jürgen
Goethestrasse 8
W-7343 Kuchen(DE)**
Erfinder: **Roth, Eberhard
Kurchstrasse 47
W-7901 Lonsee-Ursprung(DE)**
Erfinder: **Bolek, Sonja
Haselbühl 19
W-7900 Ulm(DE)**

(74) Vertreter: **Patentanwälte Grünecker, Kinkeldey, Stockmair & Partner
Maximilianstrasse 58
W-8000 München 22(DE)**

EP 0 281 646 B1

**Beschreibung**

Die Erfindung bezieht sich auf ein Dampfdruckkochgefäß der im Oberbegriff von Anspruch 1 erläuterten Art.

Ein derartiges Dampfdruckkochgefäß ist aus der EP-A-123 197 bekannt. Das bekannte Dampfdruckkochgefäß weist einen lösbar am Deckel befestigten Griff auf. Im Griff befindet sich ein Hohlraum, in dem ein Überdruckventil untergebracht ist. Das Überdruckventil enthält einen durch eine Feder belasteten Ventilkörper, wobei das Federwiderlager unverstellbar am Griff vorgesehen ist. Um den Ventilkörper in eine Abdampfstellung zu bringen, wird dieser durch eine Steuereinrichtung gegen die Kraft der Feder von seinem Dichtsitz abgehoben. Der Hohlraum ist zum Deckel hin durch eine Metallplatine verschlossen und im Bereich des Sicherheitsventils gegen Verschmutzung über eine Membran abgedichtet, in die der Ventilkörper eingeknöpft ist. Zum Reinigen muß der gesamte Griff vom Deckel abgenommen werden, wobei lediglich der Kopf des Ventilkörpers für eine Reinigung zugänglich ist.

Aus dem EP-A-Patent 0 008 465 ist ein Dampfdruckkochgefäß bekannt, bei dem das Überdruckventil, zusammen mit einem Stößel für die Druckanzeige, in einem Gehäuse untergebracht ist. Das Gehäuse erstreckt sich mit einem Außengewindeteil durch eine Öffnung im Deckel und ist an der Innenseite des Deckels mit einer aufgeschraubten Mutter gehalten. An der Außenseite des Dampfdruckkochgefäßes ist auf das Ventilgehäuse eine Ventilkappe aufgeschraubt, deren Abstand vom Deckel vom Benutzer vergrößert oder verkleinert werden kann. Im Inneren der Ventilkappe ist ein Federwiderlager für eine Feder angeordnet, die sich an ihrer anderen Seite auf dem Ventilkörper für das Überdruckventil abstützt und diesen gegen seinen Ventilsitz drückt. Der Ansprechdruck für das Überdruckventil kann somit durch Verschrauben der Ventilkappe nach oben oder unten reguliert werden. Innerhalb eines gewissen Bereiches befindet sich das Überdruckventil in Arbeitsstellung, in der die Federkraft größer ist als der gewünschte, beim normalen Kochen im Inneren des Kochgefäßes auftretende Dampfdruck. Die Ventilkappe kann jedoch nach oben in eine Abdampfstellung geschraubt werden, in der die Federkraft zunehmend geringer wird als der Dampfdruck im Inneren des Kochgefäßes. Dadurch ist ein schnelles Abdampfen möglich, so daß der Deckel geöffnet werden kann. Zum Reinigen muß die Mutter abgeschraubt und das gesamte Ventilgehäuse vom Deckel abgenommen werden.

Um dann den Ventilsitz zugänglich zu machen und diesen zu reinigen, muß weiterhin die Ventilkappe abgeschraubt und das Überdruckventil in seine Bestandteile zerlegt werden, wobei nicht auszuschließen ist, daß Einzelteile verloren gehen. Auch muß der Benutzer immer genau darauf achten, alle Einzelteile wieder in der richtigen Reihenfolge und an der richtigen Stelle in das Gehäuse einzustecken und das Ventilgehäuse über die Mutter fest mit dem Deckel zu verbinden. Dadurch wird jedoch der Reinigungsvorgang des Ventilgehäuses sehr umständlich, so daß eine gründliche Reinigung wohl öfters unterbleibt. Dadurch besteht jedoch die Gefahr, daß das Überdruckventil durch festgesetzte Speisereste oder einen Fettfilm nicht mehr ausreichend funktioniert.

Aus der US-PS 2 614 724 ist ein Dampfdruckkochgefäß bekannt, bei dem das Überdruckventil nicht durch eine Feder sondern durch Gewichtsplatten belastet ist. Der Ventilkörper wird von der unteren Gewichtsplatte gehalten und geführt. Der Ventilsitz befindet sich im Deckel. Die Gewichtsplatten sind unabhängig voneinander schwenkbar am Deckel befestigt, so daß sie einzeln hochgeklappt werden können, um den Ansprechdruck des überdruckventils in Abhängigkeit vom gewünschten Druck im Kochgefäß variieren zu können. Zwar ist hier eine Reinigung relativ problemlos, die Handhabung des Kochgefäßes im Betrieb ist jedoch mit Unfallgefahren verbunden. So müssen alle Gewichtsplatten zum Abdampfen hochgeklappt sein, bevor die Verriegelung zum Öffnen des Deckels gelöst ist. Werden die normalerweise heißen Gewichtsplatten hochgehoben, so tritt unmittelbar neben der Hand der Bedienperson ein scharfer, heißer Dampfstrahl aus dem Ventilsitz im Deckel aus, der fast zwangsläufig die Hand des Benutzers trifft.

Die Gewichtsplatten erhöhen notwendigerweise das Gewicht des Deckels beträchtlich, so daß dieser u. U. nicht mehr mit nur einer Hand gehalten werden kann. Wird die Ventilöffnung kleingehalten, um Gewicht zu sparen, wächst die Gefahr einer Verstopfung.

Der Erfindung liegt somit die Aufgabe zugrunde, ein Dampfdruckkochgefäß der genannten Art bereitzustellen, das bei einfachem konstruktiven Aufbau zuverlässig in der Funktion ist, und das einfach zu reinigen ist.

Die Aufgabe wird durch die kennzeichnenden Merkmale des Hauptanspruches gelöst.

Durch die erfindungsgemäße Ausgestaltung sind zum Reinigen alle Teile des Überdruckventils frei zugänglich, ohne daß eine vollständige Demontage des Ventils vorgenommen werden muß.

Durch die Ausgestaltung nach Anspruch 2 wird die Zugänglichkeit zum Reinigen noch weiter verbessert.

Anspruch 3 beschreibt eine besonders bevorzugte Ausgestaltung der Steuereinrichtung.

Anspruch 4 beschreibt ein erstes Ausführungsbeispiel für ein Betätigungsmittel, das besonders einfach und problemlos mit einer Hand zu betätigen ist.

Die Anordnung der Drehachse der Klappe nach Anspruch 5 erlaubt eine kompakte Bauweise.

Die Ausgestaltungen nach den Ansprüchen 6 bis 8 sind einfach in der Herstellung und trotzdem zuverlässig in ihrer Wirkung.

Anspruch 9 beschreibt ein erstes Ausführungsbeispiel der Anordnung der Führungsfläche.

Die Ausgestaltung nach Anspruch 10 erleichtert die Betätigung.

Die Ansprüche 11 und 12 beschreiben ein erstes Ausführungsbeispiel der Verschwenkung der Klappe durch das Steuerglied.

Die Ansprüche 13 bis 15 beschreiben ein zweites Ausführungsbeispiel, wie das Steuerglied die Klappe bewegen kann.

Die Ansprüche 16 und 17 beschreiben ein drittes Ausführungsbeispiel, wie das Steuerglied die Klappe bewegen kann.

Die Ansprüche 18 bis 20 beschreiben ein viertes Ausführungsbeispiel, wie das Steuerglied die Klappe bewegen kann.

Die Ansprüche 21 bis 23 beschreiben ein fünftes Ausführungsbeispiel, wobei hier die Drehachse der Klappe an der der Steuervorrichtung abgewandten Seite des Überdruckventils angeordnet ist. Dadurch kann die Steuereinrichtung äußerst unkompliziert und sehr robust ausgebildet werden.

Die Ansprüche 24 und 25 betreffen ein sechstes Ausführungsbeispiel, bei dem die Klappe über einen Druckknopf verschwenkt wird.

Die nach Anspruch 26 im Inneren einer Griffhälfte untergebrachte Steuereinrichtung ist damit gegen Beschädigung weitgehend geschützt.

In Verbindung mit einem in eine Nut eingreifenden Kulissenstein nach Anspruch 27 ist auf besonders vorteilhafte Weise ein mit dem Betätigungsmittel verschiebbarer Riegel vorgesehen, durch den sichergestellt werden kann (Ansprüche 27 bis 30), daß die Klappe nicht in Reinigungsstellung bewegt werden kann, solange der Deckel noch auf dem Kochgefäß liegt. Dadurch wird auf einfache Weise sichergestellt, daß das Überdruckventil nicht unbeabsichtigt voll geöffnet wird.

Eine weitere Sicherung gegen Fehlbedienung beschreibt Anspruch 31. Dadurch wird sichergestellt, daß das Überdruckventil nur dann in seine Arbeitsstellung gebracht werden kann, wenn sich der Deckel auf dem Kochgefäß in einer zum Kochen vorbestimmten Lage befindet. Somit kann sich bei unkorrekt aufsitzendem Deckel kein Innendruck aufbauen.

Die Ansprüche 32 bis 37 beschreiben alternative konstruktive Ausgestaltungen des Sperrteils.

Die Ausgestaltungen nach den Ansprüchen 38 bis 40 vereinfachen das Schließen des Deckels, da damit das nie Nut versperrende Sperrteil leichter aus seiner Sperrstellung gehoben werden kann.

Nach Anspruch 41 können unterschiedliche Ansprechdrücke für die Überdruckfunktion eingestellt werden.

Ausführungsbeispiele der Erfindung werden nachfolgend anhand der Zeichnungen näher erläutert. Es zeigen:

| | |
|---|---|
| Fig. 1 | eine erstes Ausführungsbeispiel der Erfindung in Arbeitsstellung des Überdruckventils, |
| Fig. 1A | die Stellung des Riegels aus Figur 1, |
| Fig. 2 | das Ausführungsbeispiel aus Figur 1 in Abdampfstellung, |
| Fig. 2A | die Lage des Riegels aus Figur 2, |
| Fig. 3 | das Ausführungsbeispiel aus Figur 1 in Reinigungsstellung, |
| Fig. 3A | die Lage des Riegels aus Figur 3, |
| Fig. 4 | die Steuereinrichtung des Ausführungsbeispieles nach Figur 1 in auseinandergezogener Darstellung, |
| Fig. 5 | ein weiteres Ausführungsbeispiel der Erfindung in Arbeitsstellung, |
| Fig. 5A | die Lage des Riegels aus Figur 5, |
| Fig. 6 | das Ausführungsbeispiel nach Figur 5 in Abdampfstellung, |
| Fig. 6A | die Lage des Riegels in Figur 6, |
| Fig. 7 | das Ausführungsbeispiel nach Figur 5 in Reinigungsstellung, |
| Fig. 7A | die Lage des Riegels aus Figur 7, |
| Fig. 8 | die Steuereinrichtung des Ausführungsbeispieles nach Figur 5 in auseinandergezogener Darstellung, |
| Fig. 9 | einen Querschnitt durch den Kulissenstein, |
| Fig. 10 | ein weiteres Ausführungsbeispiel der Erfindung in Arbeitsstellung, |
| Fig. 10 A | eine Draufsicht auf den Riegel nach Figur 10, |
| Fig. 10 B | eine Seitenansicht des Riegels nach Figur 10 A, |
| Fig. 10 C | eine Draufsicht auf das Sperrteil nach Figur 10, |
| Fig. 11 | ein weiteres Ausführungsbeispiel der Erfindung in Arbeitsstellung, |
| Fig. 11 A | eine Draufsicht auf den Riegel nach Figur 11, |
| Fig. 11 B | die Seitenansicht des Riegels nach Figur 11 A, |
| Fig. 11 C | eine Draufsicht auf das Sperrteil nach Figur 11, |
| Fig. 12 | ein weiteres Ausführungsbeispiel der Erfindung in Arbeitsstellung, |
| Fig. 12 A | eine Draufsicht auf den Riegel aus Figur 12, |
| Fig. 12 B | eine Seitenansicht des Riegels aus Figur 12 A, |
| Fig. 12 C | eine Draufsicht auf das Sperrteil |

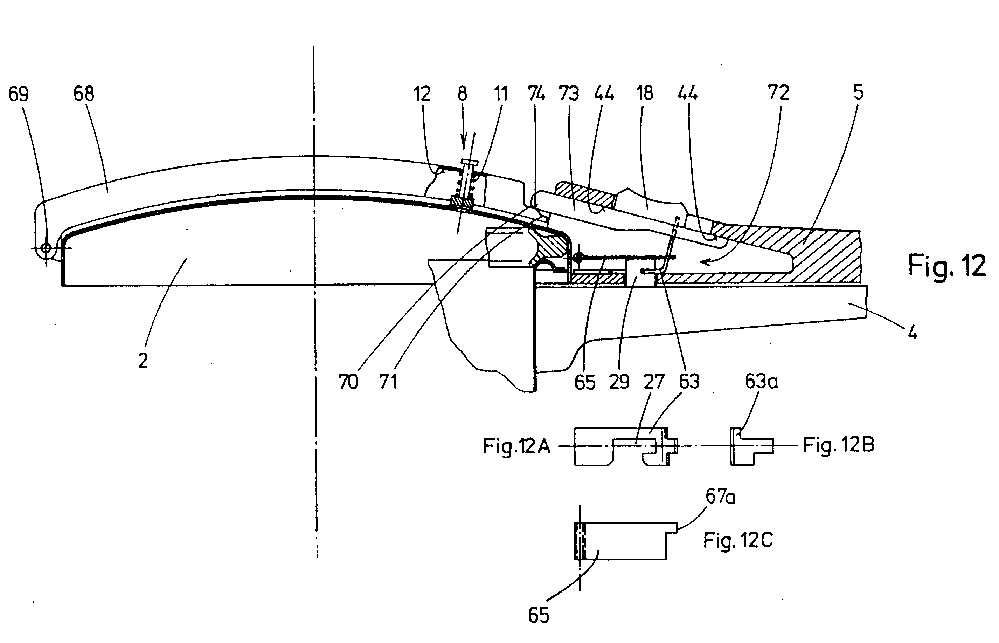

nach Figur 12,

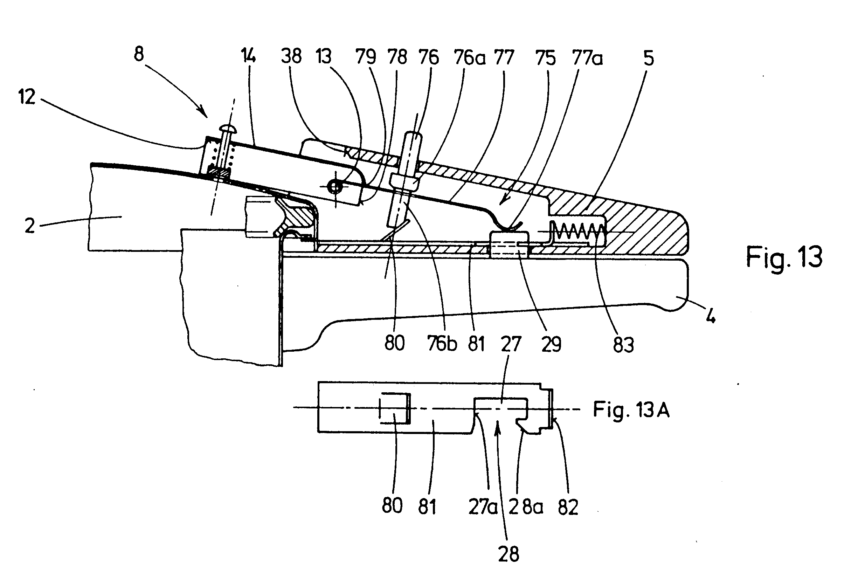

Fig. 13 ein weiteres Ausführungsbeispiel der Erfindung in Arbeitsstellung,

Fig. 13 A ein Draufsicht auf den Riegel nach Figur 13.

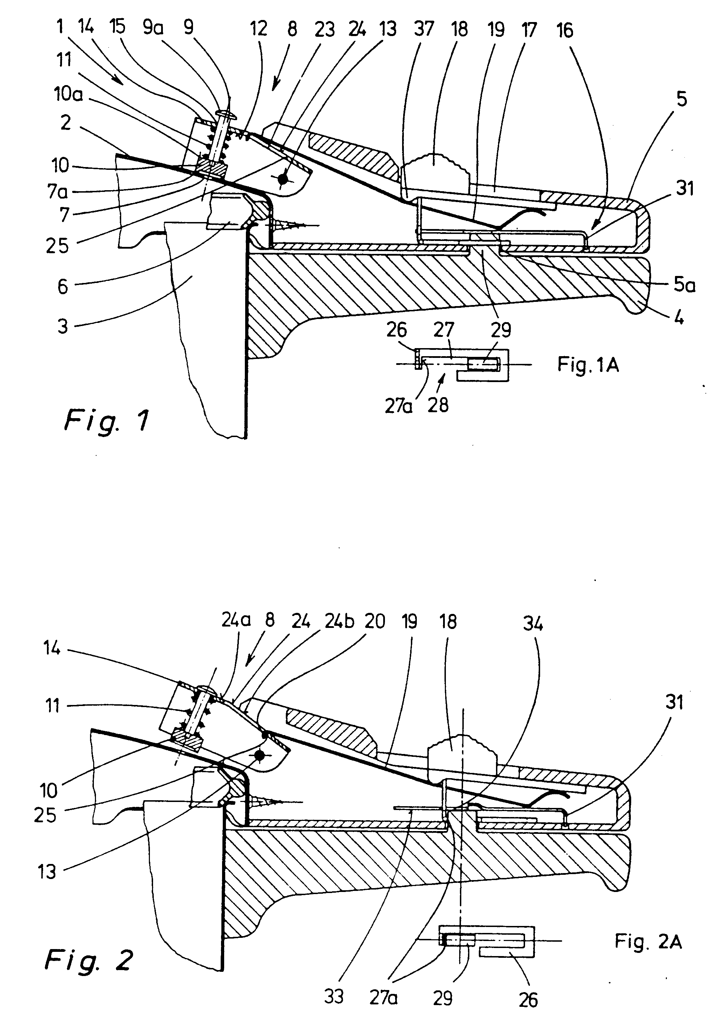

Aus Figur 1 ist in schematischer Darstellung ein Teil eines Dampfdruckkochgefäßes 1 ersichtlich, das einen Deckel 2 und das eigentliche Kochgefäß 3 aufweist. Am Kochgefäß 3 ist eine Griffhälfte 4 eines der üblichen Stielgriffe befestigt. Die andere Griffhälfte 5 ist mit dem Deckel 2 verbunden. Der Deckel 2 ist z. B. in bekannter Weise über einen Bajonettverschluß mit dem Kochgefäß 3 zu verbinden, wobei in der Kochstellung die Griffhälften 4 und 5 miteinander fluchten müssen. Deckel 2 und Gefäß 3 sind in ebenfalls bekannter Weise über einen Dichtring 6 gegeneinander abgedichtet.

Der Deckel 2 weist eine Öffnung 7 auf. Im Abstand um die Öffnung 7 herum ist ein Ventilsitz 7a für ein Überdruckventil 8 ausgebildet. Das Überdruckventil 8 weist weiterhin einen Ventilkörper 9 mit einem Dichtungsteil 10 auf. Auf einer Schulter 10 a des Dichtungsteiles 10 stützt sich eine Druckfeder 11 ab. Das andere Ende der Druckfeder 11 liegt an einem Federwiderlager 12 an, das an einer um eine Drehachse 13 schwenkbaren Klappe 14 angeordnet ist. Die Klappe 14 weist eine Führungs-Öffnung 15 auf, die sich im wesentlichen senkrecht zur Oberfläche des Dekkels 2 erstreckt und in der Ventilkörper 9 geführt ist. Der Ventilkörper 9 ist durch einen erweiterten Kopf 9a gegen das Herausrutschen aus der Führungsöffnung 15 gesichert. Das Federwiderlager 12 an der Klappe 14 kann dem Deckel 2 so weit angenähert werden, daß die Feder 11 in der in Figur 1 gezeichneten Arbeitsstellung zwischen dem Federwiderlager 12 und der Schulter 10 a mit einer die Überdruckfunktion sichernden Federkraft vorgespannt ist. Dabei ist der Ventilkörper 9 mit dem Dichtungsteil 10 länger als der Abstand zwischen dem Federwiderlager 12 und dem Deckel 2 in Arbeitsstellung, so daß der Ventilkörper 9 nach oben aus der Führungsöffnung 15 herausragt. Die Drehachse 13 ist auf der dem Stielgriff zugewandten Seite des Überdruckventiles 9 angeordnet und bevorzugt in der Griffhälfte 5 gelagert. Die Griffhälfte 5 ist im Inneren hohl und enthält eine Steuereinrichtung 16. In der Oberseite der Griffhälfte 5 ist ein Schlitz 17 vorgesehen, durch den sich ein als Schiebeknopf 18 ausgebildetes Betätigungsmittel für die Steuereinrichtung 16 erstreckt, so daß es für die Bedienperson leicht zugänglich ist.

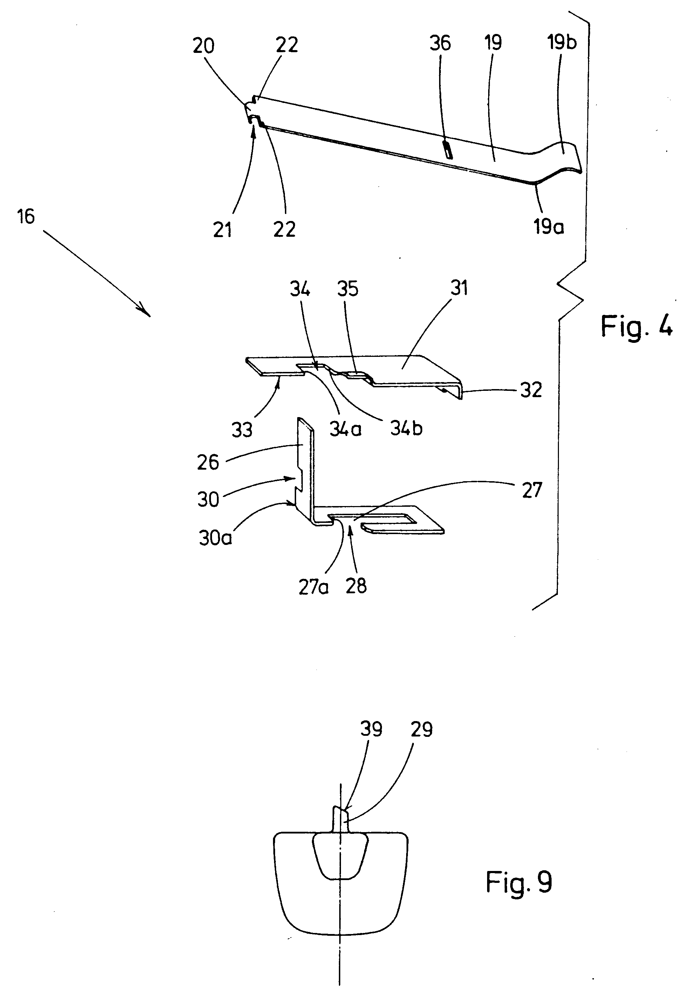

Die Steuereinrichtung 16 weist ein auch in Figur 4 ersichtliches Steuerglied 19 auf. Das Steuerglied 19 ist streifenförmig ausgebildet, besteht aus Federstahlblech und weist an einem Ende eine abgebogene Nase 20 auf, die an ihrer Unterseite eine Ausnehmung 21 umschließt. Die Nase 20 ist schmaler als das Steuerglied 19, so daß sich beidseitig der Nase 20 zwei Anlagebereiche 22 erstrekken. Das Steuerglied 19 greift mit seiner Nase 20 in einen Schlitz 23 ein, der in der dem Deckel 2 abgewandten Oberseite der Klappe 14 vorgesehen ist. Beidseitig des Schlitzes 23 erstrecken sich Führungsflächen 24, an denen die Anlagebereiche 22 des Steuergliedes 19 zur Anlage kommen. Die Führungsflächen 24 verlaufen im wesentlichen in Betätigungsrichtung des Schiebeknopfes 18, sind jedoch bezüglich dieser Bewegungsbahn nach oben geneigt. Die Führungsflächen 24 weisen einen ersten, vom Schiebeknopf 18 weiter entfernten Bereich 24 a und einen sich in Richtung auf den Schiebeknopf 18 anschließenden zweiten Bereich 24 b auf, wobei sich die Anlagebereiche 22 des Steuergliedes 19 in der in Fig. 1 gezeichneten Arbeitsstellung im ersten Bereich 24a befinden. Das der Drehachse 13 am nächsten liegende Ende des Schlitzes 23 ist als Anschlagsteg 25 ausgebildet, der in die Ausnehmung 21 der Nase 20 eintreten kann. Das der Nase 20 abgewandte Ende des Steuergliedes 19 ist bei 19a und 19b abgekröpft.

Der Schiebeknopf 18 ist mit einem senkrechten Schenkel eines L-förmigen Riegels 26 mitnehmbar verbunden, wobei der Riegel 26 aus einem Blechstreifen besteht. Der waagerechte Schenkel enthält eine L-förmige Nut 27 mit einer Endkante 27 a, die in eine in der Nähe des senkrechten Schenkels angeordnete Eintrittsöffnung 28 überleitet. Die Eintrittsöffnung 28 und die L-förmige Nut 27 sind so bemessen, daß ein Kulissenstein 29 aufgenommen werden kann. Der Kulissenstein 29 ist an der am Gefäß 3 angeordneten Griffhälfte 4 befestigt, steht in Richtung der Griffhälfte 5 vor und kann beim Ausrichten der Griffhälften 4 und 5 zueinander in einen Eintrittsspalt 5 a in der oberen Griffhälfte 5 eintreten. Steht der Schiebeknopf 18 in der in Figur 1 gezeichneten Stellung, d.h. am deckelseitigen Ende des Schlitzes 17, so befindet sich der Kulissenstein 29, wie Figur 1 A zeigt, im Inneren der L-förmigen Nut 27 und wird somit durch den Riegel 26 gegen eine Bewegung längs des Eintrittsspaltes 5 a verriegelt, so daß die Griffhälften 4 und 5 nicht mehr relativ zueinander bewegt werden können, wie es zum Öffnen des Deckels 2 notwendig wäre. Das Dampfdruckkochgefäß 1 kann somit in dieser Stellung des Schiebeknopfes 18 nicht geöffnet werden.

Wie näher aus Figur 4 ersichtlich, weist der senkrechte, mit dem Schiebeknopf 18 verbundene Schenkel des Riegels 26 eine Ausnehmung 30 auf, durch die sich ein Sperrteil 31 erstreckt.Das Sperrteil 31 besteht ebenfalls im wesentlichen aus einem dünnen Blechstreifen und ist mit einer Abwinkelung 32 versehen. Die Abwinkelung 32 ist kippbar in der der Griffhälfte 4 zugewandten Wandung der Griffhälfte 5 gelagert und ragt in das Innere des Hohlraums der Griffhälfte 5 vor. Das Sperrteil 31 enthält an seinem der Abwinkelung 32 abgewandten Ende einen Bereich 33, mit dem das Sperrteil 31 durch die Ausnehmung 30 des Riegels 26 in der in Figur 1 gezeigten Stellung ragt. An den Bereich 33 schließt sich in Richtung auf die Abwinkelung 32 eine Ausnehmung 34 mit einer deckelseitigen vorderen Kante 34a und einer hinteren Kante 34b an. Die Ausnehmung 34 ist mindestens so tief wie die Ausnehmung 30, bevorzugt etwas tiefer. An die Ausnehmung 34 schließt sich in Richtung auf die Abwinkelung 32 und in Verlängerung der hinteren Kante 34b eine Abkröpfung 35 an, wobei das Sperrteil 31 in der Nähe der hinteren Kante 34b und hinter der Abkröpfung 35 auf dem Kulissenstein 29 abstützbar ist. Die Abkröpfung 35 weist auf ihrer Unterseite eine schräge Rampenfläche auf, deren Zweck weiter unten näher erläutert wird.

Wie insbesondere aus den Figuren 1 und 4 ersichtlich, ist das Steuerglied 19 mit einem Schlitz 36 versehen, durch den sich der Riegel 26 erstreckt. Auf diese Weise wird das Steuerglied 19 bei der Bewegung des Schiebeknopfes 18 im Schlitz 17 mitgenommen. Dabei ist der Schiebeknopf 18 an seiner dem Steuerglied 19 zugewandten Seite mit einem vorspringenden Nocken 37 versehen. Das Steuerglied 19 stützt sich mit seiner unteren Kante 19a der Abkröpfung auf dem Sperrteil 31 zwischen der Rampenfläche 25 und der Abwinkelung 32 ab. Mit der anderen Kante 19b der Abkröpfung liegt das Steuerglied 19 am Schiebeknopf 18 an. Der Nocken 37 steht bis über die geradlinige Verbindung zwischen der Abstützung der unteren Kante 19a der Abkröpfung auf dem Sperrteil 31 und der Anlage der Anlagebereiche 22 an den Führungsflächen 24 in der in Figur 1 gezeichneten Arbeitsstellung vor. Dadurch wird das federelastische Steuerglied 19 vorgespannt, so daß über das Steuerglied 19 und die Anlagebereiche 22 auf die Führungsflächen 24 der Klappe 14 eine Kraft aufgebracht werden kann, die über das Federwiderlager 12 die Feder 11 des Überdruckventils 8 mit der Federkraft für die Überdruckfunktion vorspannt. Die Federkraft kann in bekannter Weise für unterschiedliche Ansprechdrücke vorspannbar sein. Da gleichzeitig, wie Figur 1 A zeigt, beide Griffhälften 4 und 5 gegeneinander verriegelt sind, kann der Kochvorgang beginnen.

Soll nach Ablauf der vorbestimmten Garzeit der Druck im Dampfdruckkochgefäß 1 schnell verringert werden, so wird der Schiebeknopf 18 im Schlitz 17 in Richtung auf das freie Ende der Griffhälften 4 und 5 zurückgezogen. Dabei wird sich die Nase 20 im Schlitz 23 in Richtung auf den Anschlagsteg 25 bewegen, wobei die Anlagebereiche 22 über den ersten Bereiche 24a auf den zweiten bereich 24b der Führungsflächen 24 nach unten gleiten. Dadurch wird jedoch der über das Steuerglied 19 auf die Klappe 14 und vom Federwiderlage 12 auf die Feder 11 ausgeübte Druck etwas verringert, so daß ein größerer Innendruck im Inneren des Dampfdruckkochgefäßes 1 das Dichtungsteil 10 vom Ventilsitz 7a anheben kann. Beim weiteren Zurückziehen des Schiebeknopfes 18 im Schlitz 17 wird sich die Feder 11 vollständig entspannen, wobei auch die Klappe 14 soweit angehoben wird, daß das Dichtungsteil 10 bei entspannter Feder 11 im Abstand zum Ventilsitz 7a gehalten ist. Aus Gründen einer einfacheren Definition wird diese, in den Figuren 2 und 2A dargestellte Stellung als Abdampfstellung bezeichnet, obwohl selbstverständlich, je nach Innendruck im Inneren des Dampfdruckkochgefäßes 1, ein Abdampfen bereits vorher stattfinden kann.

Wie aus den Figuren 2 und 2A ersichtlich, kann der Schiebeknopf 18 im Schlitz 17 so weit zurückgezogen werden, bis die dem senkrechten Schenkel des Riegels 26 am nächsten liegende Endfläche 27a der L-förmigen Nut 27 am Kulissenstein 29 anschlägt. In dieser Stellung befindet sich die Ausnehmung 34 des Sperrteiles 31 in Höhe der Ausnehmung 30 im Riegel 26, so daß das Sperrteil (31) nicht mehr vom Riegel 26 aufgefangen wird, wenn die Unterstützung durch den Kulissenstein 29 wegfällt. Die Nase 20 hat sich über die gesamte Länge des Schlitzes 23 bewegt und umschließt mit ihrer Ausnehmung 21 den Anschlagsteg 25 des Schlitzes 23. Die Nase 20 befindet sich somit in ihrer größten Nähe und geringfügig auf der dem Überdruckventil 8 abgewandten Seite zur Drehachse 13. Hat sich der gesamte Überdruck abgebaut, kann der Topf geöffnet werden. Dabei werden die Griffhälften 4 und 5 relativ zueinander bewegt, so daß der Bajonettverschluß zwischen dem Deckel 2 und dem Kochgefäß 3 außer Eingriff gelangt und der Deckel abgehoben werden kann.

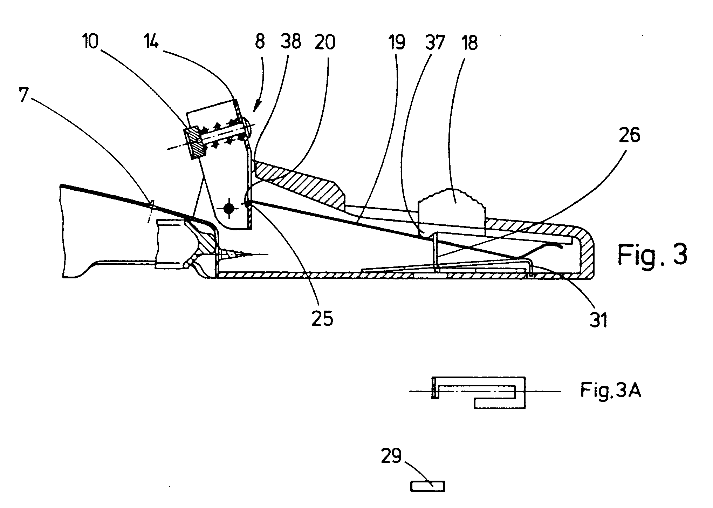

Sobald die Griffhälften 4 und 5 um einen solchen Betrag zueinander verdreht sind, daß der Kulissenstein 29 aus der Eintrittsöffnung 28 ausgetreten ist, fällt das Sperrteil 31 in die in Figur 3 gezeichnete Sperrstellung und die Endfläche 27a der L-förmigen Nut 27 kommt von ihrer Anlage am Kulissenstein 29 frei. Der Schiebeknopf 18 kann somit im Schlitz 17 ganz in eine in den Figuren 3 und 3 A dargestellte Reinigungsstellung zurückbewegt werden. Bei dieser Bewegung wird durch die am Anschlagsteg 28 angreifende Nase 20 die Klappe 14 voll nach oben geschwenkt, wobei zweckmäßigerweise an der Griffhälfte 5 ein Anschlag 38 für die Klappe 14 vorgesehen ist. In dieser Stellung ist das Steuerglied 19 im wesentlichen entspannt, bzw. wird nur so weit vorgespannt, daß der Anschlagsteg 25 in seiner Lage in der Ausnehmung 21 der Nase 20 sicher gehalten wird. Das Überdruckventil 8 mit seinem Dichtungsteil 10 und der Öffnung 7 ist somit zum Reinigen schnell und gut zugänglich.

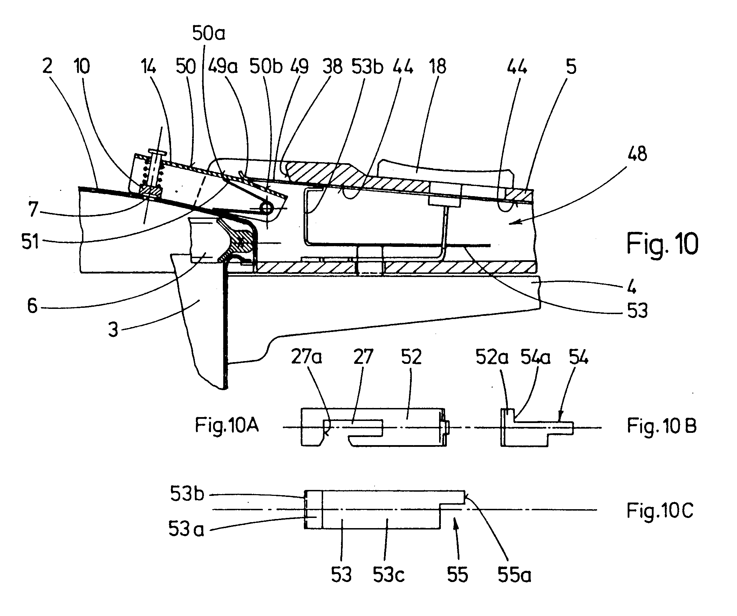

Das über der Eintrittsöffnung 28 in Höhe des Eintrittsspaltes 5a liegende Sperrteil 31 und der sich in Höhe des Kulissensteins 29 befindende senkrechte Schenkel des Riegels 26 verhindern in der Reinigungsstellung den Eintritt des Kulissensteins 29 in die L-förmige Nut 27. Will der Benutzer den Deckel 2 wieder auf das Kochgefäß 3 aufsetzen, so muß der Schiebeknopf 18 wieder in die in Figur 2 gezeichnete Stellung zurückgeschoben werden. Dabei wird der Riegel 26 in Richtung des Deckels 2 bewegt, bis sein senkrechter Schenkel im Bereich 30a gegen die der Auflagefläche 33 zugewandte vordere Kante 34a der Ausnehmung 34 schlägt. Dadurch wird die weitere Bewegung des Schiebeknopfes 18 gestoppt so daß das Überdruckventil 8 noch nicht in Arbeitsstellung gebracht werden kann. Dadurch wird verhindert, daß sich im Dampfdruckkochgefäß 1 ein Überdruck aufbauen kann, wenn der Deckel 2 noch nicht korrekt geschlossen ist. Die Eintrittsöffnung 28 befindet sich jedoch wieder in Höhe des Kulissensteines 29, wobei der Eintritt des Kulissensteines 29 nur noch durch das immer noch in Sperrstellung liegende Sperrteil 31 gesperrt ist. Bei einem weiteren Zusammenführen der Griffhälften 4 und 5, schiebt sich der Kulissenstein 29, unterstützt durch eine in Figur 9 gezeichnete, abgeschrägte Oberfläche 39, unter die Rampenfläche der Abkröpfung 35. Dadurch wird das Sperrteil 31 so weit angehoben, bis sich die vordere Kante 34a und der Bereich 3 wieder in Höhe der Ausnehmung 30 im Riegel 26 befinden. Danach kann das Betätigungsmittel 18 in die in Figur 1 gezeichnete, vorderste Stellung verschoben werden, wobei sich die Kante 34a durch die Ausnehmung 30 bewegt und der Kulissenstein 29 in die L-förmige Nut 27 ganz eintritt bis das Überdruckventil 8 in seine Arbeitsstellung verschwenkt ist.

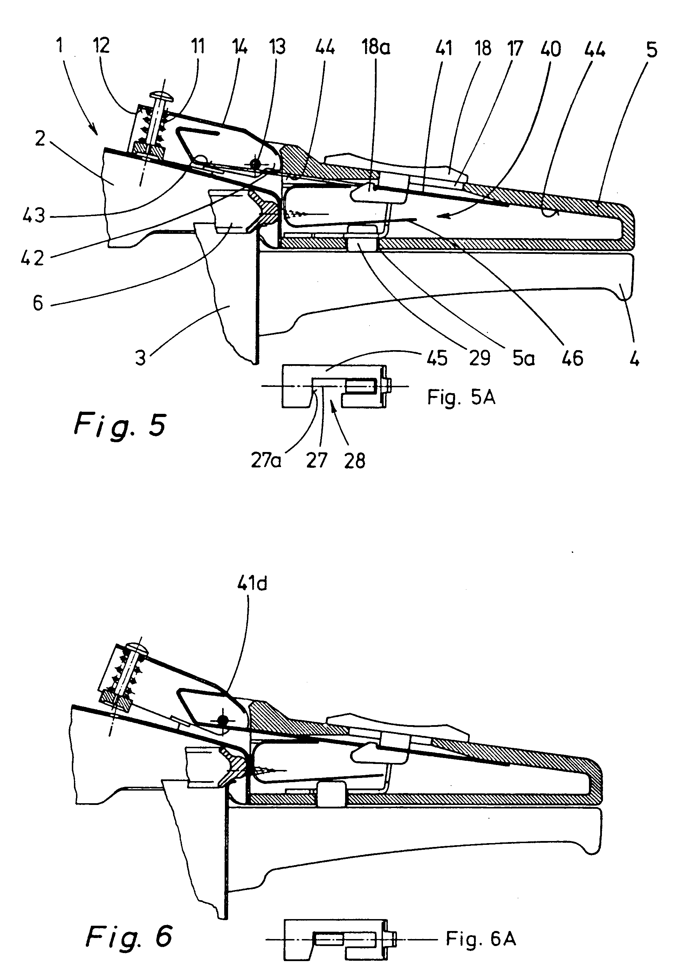

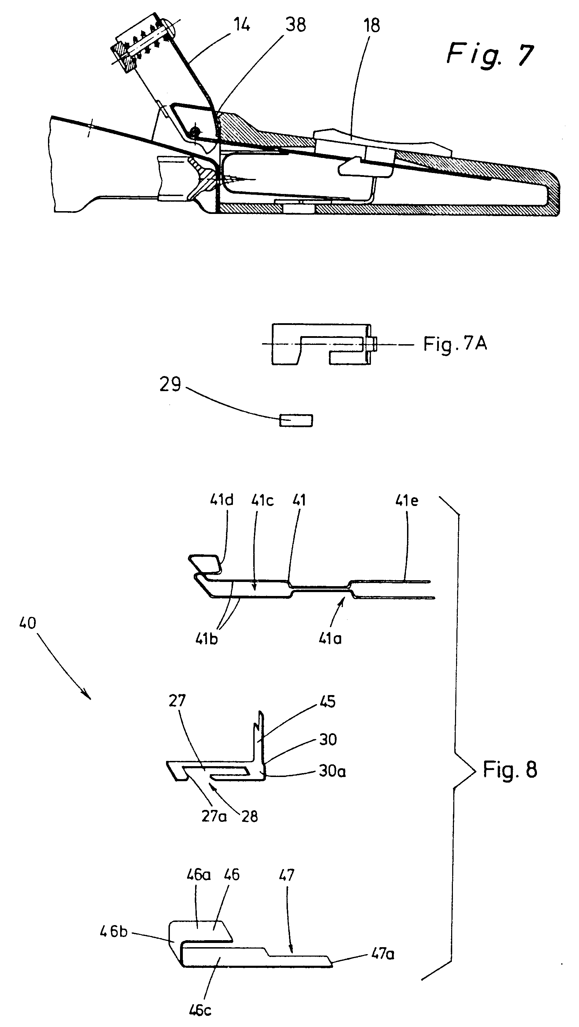

In den Figuren 5 bis 8 ist ein weiteres Ausführungsbeispiel ersichtlich, wobei gleiche Bezugszeichen gleiche oder vergleichbare Bauteile betreffen und nicht nochmals erläutert sind. In einem Hohlraum der Griffhälfte 5 ist wiederum eine über einen Schiebeknopf 18 betätigte Steuereinrichtung 40 angeordnet. Die Steuereinrichtung 40 enthält ein Steuerglied 41, das, wie Figur 8 zeigt, aus einem gebogenen Federstahldraht besteht. Das Steuerglied 41 ist mit einem Befestigungsabschnitt 41a in eine Hakenkonstruktion 18a angepaßt, die mit dem Schiebeknopf 18 verbunden ist. Die Hakenkonstruktion erstreckt sich durch eine Öffnung des Steuergliedes 41 und unter- bzw. umgreift den Befestigungsabschnitt 41a, so daß das Steuerglied 41 im wesentlichen ohne Spiel beim Verschieben des Schiebeknopfes 18 im Schlitz 17 mitgenommen werden kann. Das Steuerglied 41 weist weiterhin einen Führungsbereich 41b auf, der eine Öffnung 41c umschließt. Oberhalb des Führungsbereiches 41b erstreckt sich ein Anlageabschnitt 41d. Jenseits des Befestigungsabschnittes 41a ist ein zweiter Führungsbereich 41e vorgesehen.

Die Klappe 14 ist hohl und an ihrem der Griffhälfte 5 zugewandten Ende, in der Nähe der Drehachse 13, mit einer Öffnung 42 versehen. An dem der Griffhälfte 5 abgewandten Ende der Öffnung 42 ist eine Führungsfläche 43 angeordnet, die unterhalb der Drehachse 13 verläuft und im waagerechten Abstand zu ihr endet. Die Führungsfläche 43 ist bevorzugt auf einen Steg angeordnet, der sich beidseitig unter die Klappe 14 erstreckt.

Die Innenoberfläche der hohlen Griffhälfte 5 ist vor und hinter dem Schlitz 17 als Widerlager 44 ausgebildet, das weiter in den Hohlraum der Griffhälfte 5 hineinragt, als die Auflagefläche für das Steuerglied 41 auf der Hakenkonstruktion 18a, so daß die Führungsbereich 41b und 41e zum Vorspannen des Steuergliedes 41 gegen die Widerlager 44 gezogen werden. Der Führungsbereich 41b ragt durch die Öffnung 42 in das Innere der Klappe 14 hinein und liegt in der in Figur 5 gezeichneten Arbeitsstellung auf der Führungsfläche 43 auf. Durch die Vorspannung des Steuergliedes 41 zwischen der Hakenkonstruktion 18a, den Widerlagern 44, sowie einer Abstützung an der Drehachse 13 übt der Führungsbereich 41b auf die Führungsfläche 43 eine Kraft aus, die die Klappe 14 in ihrer am Deckel 2 anliegenden Stellung hält, wobei über das Federwiderlager 12 die Feder 11 mit einer für die Überdruckfunktion notwendigen Kraft vorgespannt ist.

Mit dem Schiebeknopf 18 ist in bereits beschriebener Weise ein Riegel 45 mitnehmbar verbunden, der wiederum die Ausnehmung 30 und eine L-förmige Nut 27 enthält, die eine Eintrittsöffnung 28 für den von der Griffhälfte 4 vorstehenden Kulissenstein 29 aufweist, die in bereits beschriebener Weise fluchtend mit dem Eintrittsspalt 5a in der oberen Griffhälfte 5 ausgerichtet werden kann. Der Riegel 45 unterscheidet sich vom Riegel 26 dadurch, daß er um 180° verdreht angeordnet ist, wobei sich die Endfläche 27a und die Eintrittsöffnung 28 an der dem senkrechten Schenkel abgewandten Seite der L-förmigen Nut 27 befinden.

Auch bei diesem Ausführungsbeispiel ist ein Sperrteil 46 vorgesehen, das aus einem wesentlichen U-förmig gebogenen Streifen aus Federstahlblech gefertigt wurde. Einer der Schenkel 46a liegt in der Nähe des Befestigungsbereiches 41a am Steuerglied 41 an. Der Verbindungssteg 46b des U-förmigen Sperrteils 46 ist am Deckel 2 festgelegt, bevorzugt durch Befestigungsmittel, die auch die Griffhälfte 5 am Deckel 2 befestigen. Der andere Schenkel 46c reicht bis über den Eintrittsspalt 5a und liegt in der in Figur 5 gezeichneten Stellung auf dem Kulissenstein 29 auf und wird dadurch in Richtung auf seinen anderen Schenkel 46a vorgespannt. Diese Auflage wird dadurch erreicht, daß im Schenkel 46c eine mit der Ausnehmung 30 korrespondierende Ausnehmung 47 vorgesehen ist.

Soll das Überdruckventil 8 in seine in Figur 6 gezeichnete Abdampfstellung verschoben werden, so wird der Schiebeknopf 18 so weit zurückgezogen, bis die Endkante 27a des Riegels 45 am Kulissenstein 29 anschlägt. Dadurch wird das Steuerglied 41 so weit mitgenommen, daß der Führungsbereich 41b von der Führungsfläche 43 freikommt, die auf die Führungsfläche 43 wirkende Vorspannung somit weggenommen wird. Der Anlageabschnitt 41d des Steuergliedes 41 legt sich oberhalb der Drehachse 13 an die Innenoberfläche der hohlen Klappe 14 und schwenkt diese um einen das Abdampfen ermöglichenden Betrag nach oben. Der Schenkel 46c des Sperrteiles 46 ist vollständig aus der Ausnehmung 30 des Riegels 45 ausgetreten. Der Deckel 2 kann zum Lösen des Bajonettverschlußes verdreht und danach abgenommen werden. Sobald sich der Kulissenstein aus der Eintrittsöffnung 28 herausbewegt hat, schnappt der Arm 46c des Sperrteiles 46 nach unten und versperrt Eintrittsöffnung 28 und Eintrittsspalt 5a.

Nachdem der Kulissenstein 29 aus seinem Eingriff mit dem Riegel 45 gelöst wurde, kann der Schiebeknopf 18 in die in Figur 7 gezeichnete Reinigungsstellung zurückgezogen werden. In dieser Stellung ist das Steuerglied 41 so weit zurückgezogen, daß der Anlageabschnitt 41d in der Lage ist, die Klappe 14 in ihre höchste Stellung, bevorzugt wiederum gegen den Anschlag 38 zu klappen. Dabei bewegt sich die Endfläche 27a der L-förmigen Nut 27 über den Eintrittsspalt 5a. Damit kann der Kulissenstein so lange nicht in den Eintrittsspalt 5a eintreten, solange sich der Schiebeknopf 18 in der Reinigungsstellung befindet.

Soll der Deckel 2 wieder auf dem Kochgefäß 3 befestigt werden, so wird zunächst der Schiebeknopf 18 in die in Figur 6 gezeichnete Abdampfstellung geschoben, so daß die Eintrittsöffnung 28 mit dem Eintrittsspalt 5a fluchtet. Dabei schlägt jedoch eine hintere Kante 47a des Sperrteiles 46 an einen Bereich 30a des senkrechten Schenkels des Riegels 45 unterhalb der Ausnehmung 30 an, so daß der Schiebeknopf 18 nicht weiter in Arbeitsstellung verschoben werden kann.

Beim weiteren Ausrichten der Griffhälften 4 und 5 zueinander schiebt sich der Kulissenstein, wiederum unterstützt durch die in Figur 9 dargestellte abgeschrägte Oberfläche 39, unter den Schenkel 46c des Sperrteiles 46 und hebt diesen so weit an, daß die hintere Kante 47a wieder auf gleicher Höhe mit der Ausnehmung 30 liegt. Nun kann der Schiebeknopf 18 vollständig in die in Figur 5 gezeichnete Arbeitsstellung verschoben werden, wobei sich der Führungsbereich 41b wieder auf die Führungsfläche 43 schiebt und diese in Richtung auf den Deckel derart belastet, daß die Feder 11 in gewünschter Weise vorgespannt wird.

Die Figuren 10 sowie 10 A bis 10 C zeigen ein weiteres Ausführungsbeispiel, wobei gleiche Bezugszeichen gleiche bzw. vergleichbare Bauteile bezeichnen. Im hohlen Inneren der oberen Griffhälfte 5 ist eine Steuereinrichtung 48 angeordnet und über einen Schiebeknopf 18 zu betätigen Die steuereinrichtung 48 weist ein Steuerglied 49 auf, das aus einem Streifen aus Federstahlblech besteht. Das Steuerglied 49 ist in bekannter Weise mit dem Schiebeknopf 18 mitnehmbar verbunden und wird durch die Art seiner Befestigung am Schiebeknopf 18 unter Vorspannung gegen Widerlager 44 gezogen, die sich vor und hinter dem Schlitz 17 erstrecken. An seinem der Klappe 14 zugewandten Ende ist das Steuerglied 49 mit einer Aufbiegung 49a versehen, die auf einer Führungsfläche 50 aufliegt, die oberhalb der Drehachse 13 auf der Oberseite der Klappe 14 ausgebildet ist. Die Führungsfläche 50 weist einen ersten Bereich 50a und einen zweiten Bereich 50b auf, der sich in Richtung auf die Griffhälfte 5 an den ersten Bereich 50a anschließt. Der erste Bereich 50a ist gegenüber der Bewegungsrichtung des Schiebeknopfes 18 um einen ersten, kleineren Winkel geneigt, während der zweite Abschnitt 50b unter einem größeren Neigungswinkel zur Bewegungsrichtung des Schiebeknopfes 18 verläuft. Die Klappe 14 ist durch eine Torsionsfeder 51 in Richtung auf das Steuerglied 49 belastet. Die Torsionsfeder 51 ist bevorzugt um die Drehachse 13 gelegt.

In der in Figur 10 gezeichneten Arbeitsstellung ist das Steuerglied 49 durch seine Befestigung am Schiebeknopf 18 und die Anlage an den Widerlagern 44 derart vorgespannt, daß die Aufbiegung 49a auf die Führungsfläche 50 der Klappe 14 drückt, wobei sich die Aufbiegung 49a auf dem ersten Bereich 50a der Führungsfläche befindet. Bevorzugt wird der Neigungswinkel dieses Abschnittes 50a der Führungsfläche 50 an den selbsthemmenden Neigungswinkel zwischen dem Steuerglied 49 und der Klappe 14 angepaßt und die Hebelverhältnisse zwischen der Drehachse und dem Angriffspunkt der Torsionsfeder an der Klappe einerseits bzw. dem Angriffspunkt der Aufbiegung 49a anderseits so bemessen, daß die Torsionsfeder 51 nicht in der Lage ist, das Steuerglied 49 selbsttätig aus der Arbeitsstellung zu verschieben.

Die Steuereinrichtung 48 weist in bereits beschriebener Weise einen Riegel 52 und ein Sperrteil 53 auf. Der Riegel 52 ist analog dem Ausführungsbeispiel nach Figur 5 angeordnet und mit der L-förmigen Nut versehen, deren Eintrittsöffnung 28 und deren Endkante 27a an der dem senkrechten Schenkel abgewandten Seite der Nut 27 angeordnet sind. An der der Eintrittsöffnung 28 abgewandten Seite des Riegels 52 befindet sich in seinem senkrechten Schenkel eine Ausnehmung 54, deren Funktionen mit der Ausnehmung 30 vergleichbar ist. Die Ausnehmung 54 erstreckt sich, wie Figur 10 B zeigt, bis in den Bereich des Schiebeknopfes 18.

Das in Figur 10 C dargestellte Sperrteil 53 besteht wiederum aus einem U-förmig gebogenen Blechstreifen aus Federstahl mit einem kürzeren Schenkel 53a, einem Verbindungssteg 53b und einem längeren Schenkel 53c. Der kürzere Schenkel 53a ist an der Seite des Widerlagers 44 befestigt, wobei der längere Schenkel 53c in der in Figur 10 gezeichneten Arbeitsstellung auf dem Kulissenstein 29 aufliegt. Der Schenkel 53c ist in bereits beschriebener Weise mit einer Ausnehmung 55 versehen, die mit der Ausnehmung 54 derart zusammenwirkt, daß diese Auflage des Schenkels 53c auf dem Kulissenstein 29 ermöglicht ist. Zusätzlich kann der Schenkel 53c auch auf einem die untere begrenzung der Ausnehmung 54 bildenden Absatz 54a aufliegen.

Wird der Schiebeknopf 18 aus der in Figur 10 gezeichneten Arbeitsstellung in eine nicht gezeichnete Abdampfstellung zurückgezogen, so gelangt die Aufbiegung 49a des Steuergliedes 49 vom Abschnitt 50a der Führungsfläche 50 auf den stärker nach unten geneigten Abschnitt 50b. Auf diese Weise wird die Vorspannung des Steuergliedes 49 gelockert und der Angriffspunkt des Steuergliedes 49 näher in Richtung auf die Drehachse 13 verlagert. Dies erlaubt der Torsionsfeder 51 die Klappe 14 so weit nach oben zu verschwenken, daß die Federkraft der Feder 11 gelöst und das Dichtungsteil 10 in bereits beschriebener Weise in einen Abstand zur Öffnung 7 im Deckel 2 verschwenkt wird, der ein gefahrloses Abbauen des Kochdruckkes in der Abdampfstellung ermöglicht. Dabei schlägt in bereits beschriebener Weise die Endfläche 27a der L-förmigen Nut 27 an den Kulissenstein 29 an und das Sperrteil 53 tritt aus der Ausnehmung 54 im Riegel 52 aus. Der Deckel 2 kann verdreht und geöffnet werden, wobei der längere Schenkel 53c des Sperrteiles 53 nach unten fällt.

Zum Reinigen wird in bereits beschriebener Weise der Schiebeknopf 18 voll zurückgezogen, wodurch die Aufbiegung 49a in eine Stellung gezogen wird, in der sie ihren geringsten Abstand zur Drehachse 13 aufweist. Dadurch ist die Torsionsfeder 51 in der Lage, sich voll zu entspannen und die Klappe 14, zweckmäßigerweise wiederum in Anlage an den Anschlag 38 zu verschwenken. Gleichzeitig bewegt sich die Endkante 27a über den Eintrittsspalt 5a. Das Verschließen des Kochgefäßes erfolgt in bereits beschriebener Weise, wobei vor dem Übergang zur Arbeitsstellung eine hintere Kante 55a des Sperrteils 53 an einen Bereich 52a unterhalb des Absatzes 54a des Riegels 52 anschlägt und das weitere Verschieben des Schiebeknopfes 18 unmöglich macht, bis das Sperrteil 53 mit seiner Kante 55a durch den Kulissenstein 29 über das Niveau des Absatzes 54a gehoben wurde.

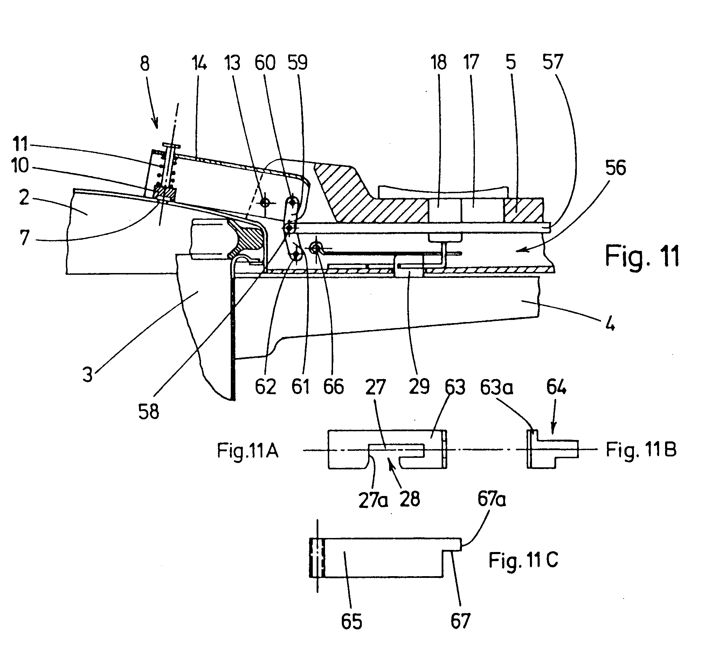

In Figur 11 ist ein weiteres Ausführungsbeispiel der Erfindung ersichtlich, wobei gleiche Bezugszeichen gleiche oder vergleichbare Bauteile kennzeichnen. Im hohlen Inneren der oberen Griffhälfte 5 ist eine Steuereinrichtung 56 mit einem Steuerglied 57 angeordnet, das wiederum mitnehmbar mit einem Schiebeknopf 18 verbunden ist. Das Steuerglied 57 ist als starre Schubstange ausgebildet, an deren der Klappe 14 zugewandten Ende über ein Gelenk 58 ein Schwenkhebel 59 angelenkt ist. Der Schwenkhebel 59 ist über ein zweites Gelenk 60 mit der Klappe 14 verbunden. Die Schwenkachsen der Gelenke 58 und 60 verlaufen parallel zur Drehachse 13. Das zweite Gelenk 60 ist auf der der Griffhälfte 5 zugewandten Seite der Drehachse 13 und mit waagerechtem Abstand zu ihr angeordnet. Das erste Gelenk 58 liegt unterhalb des zweiten Gelenkes 60, weist jedoch einen geringfügigen waagerechten Abstand in Richtung auf die Drehachse 13 auf, so daß der Schwenkhebel 59 bei der Bewegung des Steuergliedes 57 aus der und in die Arbeitsstellung über seinen Totpunkt geführt wird. Am Gelenk 58 ist an der dem Schwenkhebel 59 abgewandten Seite des Steuergliedes 57 ein Stützhebel 61 schwenkbar gelagert, der über ein Gelenk 62 in gleicher Weise wie der Schwenkhebel 59 gelagert ist.

Beim Zurückziehen des Schiebeknopfes 18 aus der in Figur 11 gezeichneten Arbeitsstellung werden zunächst Schwenkhebel und Stützhebel über ihren Totpunkt geführt, wobei sich das Federwiderlager 12 ein Stück in Richtung auf den Deckel bewegen wird. Sobald jedoch der Totpunkt des Schwenkhebels 59 überschritten ist, wird die Klappe 14 entlastet, so daß die Klappe 14 unter der Wirkung der sich entspannenden Feder 11 nach oben gedrückt wird, wobei das Dichtungsteil 10 die Öffnung 7 freigibt. Gleichzeitig werden die Gelenke 58 und 60 bestrebt sein, sich in einer geraden Linie mit der Drehachse 13 auszurichten, so daß auch dadurch die Klappe 14 um einen geringen Betrag in die Abdampfstellung hochgeschwenkt wird.

Mit dem Schiebeknopf 18 ist in bereits beschriebener Weise der senkrechte Schenkel eines Riegels 63 mitnehmbar verbunden. Der Riegel 63 ist ähnlich wie der Riegel 52 aus Figur 10 ausgebildet, wobei die L-förmige Nut 27 mit ihrer Endkante 27a und der Eintrittsöffnung 28 vom senkrechten Schenkel abgewandt angeordnet ist. Im senkrechten Schenkel ist wiederum eine Ausnehmung 64 vorgesehen, die analog ausgebildet und angeordnet ist wie die Ausnehmung 54 im Riegel 52.

Die Steuereinrichtung 56 enthält weiterhin ein Sperrteil 65, das streifenförmig ausgebildet und um einen in der oberen Griffhälfte 5 angeordneten Stift 66 schwenkbar gelagert ist. Die Schwenkachse des Stiftes 66 verläuft parallel zur Drehachse 13 und ist derart im Hohlraum der oberen Griffhälfte 5 angeordnet, daß sich das Sperrteil 65 in der in Figur 11 gezeichneten Arbeitsstellung im wesentlichen waagerecht auf die Oberfläche des Kulissensteines 29 auflegt, wobei eine Ausnehmung 67 im Sperrteil 65 in die Ausnehmung 64 im Riegel 63 eingreift. Wird der Riegel 63 in die Abdampfstellung verschoben, so kommt die Ausnehmung 67 im Sperrteil in bereits beschriebener Weise aus der Ausnehmung 64 im Riegel 63 frei, so daß das Sperrteil 65 in seine Sperrstellung fallen kann, sobald der Kulissenstein 29 aus der L-förmigen Nut 27 herausgetreten ist.

Danach kann der Schiebeknopf 18 voll zurückgezogen werden, wobei der Schwenkhebel 59 die Klappe 14 in die Reinigungsstellung zieht. Bei diesem Ausführungsbeispiel ist es jedoch auch möglich, am Schiebeknopf 18 nur zwei Stellungen vorzusehen. Dabei müßte in der zweiten, der Abdampfstellung des Schiebeknopfes 18, die Belastung der Klappe 14 vollständig gelöst sein, so daß diese um ihre Drehachse 13 schwingen und von Hand in die Reinigungsstellung hochgehoben werden kann.

Das Schließen des Dampfdruckkochgefäßes 1 erfolgt in bereits beschriebener Weise dadurch, daß zunächst die Endkante 27a vom Eintrittsspalt 5a entfernt wird. Bei dieser Bewegung stößt die hintere Kante 67a des Sperrteils 65 an einen Bereich 63a unterhalb der Ausnehmung 64 im Riegel 63, so daß ein weiteres Verschieben des Schiebeknopfes 18 so lange nicht möglich ist, bis der Kulissenstein 29, unterstützt durch seine abgeschrägte Oberfläche 39, das Sperrteil 65 derart angehoben hat, daß der Riegel 63 wieder in die in Figur 11 gezeichnete Stellung verschoben werden kann, in der die Ausnehmungen 67 und 64 ineinander eingreifen.

In Figur 12 ist ein weiteres Ausführungsbeispiel ersichtlich, wobei gleiche bzw. vergleichbare Bauteile dieselben Bezugzeichen tragen. Das Überdruckventil 8 ist in diesem Ausführungsbeispiel an einer Klappe 68 angeordnet, die um eine Drehachse 69 verschwenkbar ist, wobei sich die Drehachse 69 an der der oberen Griffhälfte 5 gegenüber liegenden Seite des Deckels 2 befindet. Die Klappe 68 erstreckt sich über den gesamten Durchmesser des Deckels 2 und weist an ihrer der oberen Griffhälfte 5 zugewandten Seite eine erste und eine zweite Klemmstufe 70 bzw. 71 auf. Die zweite Klemmstufe 71 ist der Griffhälfte 5 benachbart und weist einen geringeren Abstand zum Deckel 2 auf als die sich in Richtung auf die Drehachse 69 unmittelbar an die zweite Klemmstufe 71 anschließende erste Klemmstufe. Das Überdruckventil 8 kann an jeder Stelle der Klappe 68 angeordnet sein. Im Inneren der oberen Griffhälfte 5 ist eine in bereits beschriebener Weise über einen Schiebeknopf 18 betätigbare Steuereinrichtung 72 angeordnet, die ein starr ausgebildetes Steuerglied 73 enthält. Im dargestellten Ausführungsbeispiel ist das Steuerglied 73 zweckmäßigerweise einstückig mit dem Schiebeknopf 18 verbunden. Das Steuerglied 73 weist an seinem der Klappe 68 zugewandten Ende eine Klemmfläche 74 auf, die durch Verschieben des Schiebeknopfes 18 nacheinander mit den Klemmstufen 70 und 71 in Eingriff treten kann. Das Steuerglied 73 wird dabei in Anlage an Widerlager 44 gehalten, die an der Innenseite des Hohlraumes der oberen Griffhälfte 5 vorgesehen sind.

Befindet sich das Steuerglied 73 in der in Figur 12 gezeichneten, voll nach oben geschobenen Stellung, so liegt die Klemmfläche 74 auf der ersten Klemmstufe 70 auf und hält über die Klappe 68 das Federwiderlager 12 in einer Stellung, in der die Feder 11 mit der die Überdruckfunktion sichernden Federkraft vorgespannt ist. Wird der Schiebeknopf 18 zurückgezogen, so gleitet die Klemmfläche 74 von der ersten Klemmstufe 70 auf die zweite Klemmstufe 71. Dadurch wird sich unter der Kraft der sich entspannenden Feder 11 das Federwiderlager 12 vom Deckel 2 wegbewegen, so daß sich der Dampfdruck im Inneren des Dampfdruckkochgefäßes über die Öffnung 7 abbauen kann.

Auch die Steuereinrichtung 72 enthält einen Riegel und ein Sperrteil, die analog ausgebildet sind und analog wirken wie der Riegel 63 und das Sperrteil 65 aus Figur 11. Befindet sich die Klemmfläche 74 in Eingriff mit der zweiten Klemmstufe 71, so liegt die Endkante 27a der L-förmigen Nut 27 des Riegels 63 am Kulissenstein 29 an. Werden die beiden Griffhälften 4 und 5 zum Öffnen des Deckels 2 gegeneinander verdreht, so tritt der Kulissenstein 29 in bereits beschriebener Weise aus der L-förmigen Nut 27 aus, so daß das Steuerglied 73 vollständig zurückgezogen werden kann. Ist das Steuerglied 73 vollständig zurückgezogen, so kommt die Klemmfläche 74 von den Klemmstufen 70 und 71 und somit von der Klappe 68 frei, so daß die Klappe 68 zum Reinigen vollständig hochgeklappt werden kann. Das Aufsetzen des Deckels 2 und das Schließen des Dampfruckkochgefäßes erfolgt in bereits beschriebener Art und Weise, wobei selbstverständlich vor dem Zurückschieben des Steuergliedes 73 die Klappe 68 geschlossen werden muß.

In Figur 13 ist ein weiteres Ausführungsbeispiel ersichtlich, wobei gleiche Bezugzeichen gleiche bzw. vergleichbare Bauteile bezeichnen. In diesem Ausführungsbeispiel wird wiederum wie in den Figuren 1 bis 11 eine Klappe 14 verwendet, deren Drehachse 13 an der der Griffhälfte 5 zugewandten Seite des Überdruckventils 8 angeordnet und in der Griffhälfte 5 festgelegt ist. In einem Hohlraum in der oberen Griffhälfte 5 ist wiederum eine Steuereinrichtung 75 angeordnet, die durch ein als Druckknopf 76 ausgebildetes Betätigungsmittel zu betätigen ist. Die Steuereinrichtung 75 enthält ein streifenförmiges Steuerglied 77 aus Federstahlblech, das mit seinem einen Ende durch eine Öffnung 78 in das Innere der Klappe 14 ragt und dort drehbar, bevorzugt um die Drehachse 13 festgelegt ist. Die Oberkante der Öffnung 78 ist als Anschlag 79 ausgebildet, der sich an die Oberseite des Steuergliedes 77 anlegen kann. Das der Klappe 14 abgewandte Ende des Steuergliedes 77 ist mit einer Abkröpfung 77a versehen, die sich auf den Kulissenstein 29 abstützt, solange sich dieser im Eintrittsspalt 5a befindet. Die Abkröpfung 77a und der Anschlag 79 sind derart aufeinander und auf die Lage der Drehachse 13 abgestimmt, daß sich das Federlager 12 in einem die Überdruckfunktion sichernden Abstand zum Dekkel 2 befindet, wenn, wie in Figur 13 gezeichnet, der Anschlag 79 auf dem sich auf dem Kulissenstein 29 abstützenden Steuerglied aufliegt und der Druckknopf 76 nicht betätigt ist.

Der Druckknopf 76 weist einen oberhalb des Steuergliedes 77 angeordneten Flansch 76a und einen sich durch das Steuerglied 77 erstreckenden Stift 76b auf. Der Flansch 76a befindet sich in Arbeitsstellung knapp oberhalb des Steuergliedes 77 bzw. liegt leicht auf ihm an. Der Stift 76b ragt jenseits des Steuergliedes 77 nach unten und liegt im oberen Bereich einer Schrägfläche 80 an, die mit eine Riegel 81 verbunden ist. Der Riegel 81 ist mit einer L-förmigen Nut 27 versehen, deren von der Endkante 27a wegweisender Schenkel verkürzt ist und deren Eintrittsöffnung 28 mit einer Abschrägung 28a versehen ist. Jenseits der Nut 27 ist an einer Aufbiegung des Riegels 81 ein Federwiderlager 82 für eine Druckfeder 83 angeordnet, deren anderes Ende sich an der Wandung der oberen Griffhälfte 5 abstützt. Die Feder 83 ist bestrebt, den Riegel 81 in die Verriegelungsstellung zu bewegen, in der der Kulissenstein 29 in der L-förmigen Nut 27 gehalten ist.

Wird der Druckknopf 76 zum Abdampfen gedrückt, so kommt sein Flansch 76a in Anlage an das federnde Steuerglied 77 und drückt dieses nach unten durch. Dadurch entfernt sich jedoch das Steuerglied 7 vom Anschlag 79, so daß die Feder 11 das Federwiderlager 12 in einen größeren Abstand zum Deckel 2 drücken kann, wodurch es dem Überdruck im Dampfdruckkochgefäß 1 möglich ist, sich durch die Öffnung 7 abzubauen.

Gleichzeitig wird jedoch auch der Stift 76b nach unten bewegt und drückt über die Schrägfläche 80 den Riegel 81 gegen die Kraft der Feder 83 in eine Stellung, in der die Endkante 27a am Kulissenstein 29 anschlägt. In dieser Stellung können die beiden Griffhälften 4 und 5 zum Öffnen des Deckels 2 gegeneinander verdreht werden. Hat sich der Kulissenstein 29 aus der L-förmigen Nut herausbewegt, so kommt die Abkröpfung 77a von ihrer Analge am Kulissenstein 29 frei und das Steuerglied 77 fällt nach unten. Dadurch wird jedoch das Steuerglied 77 von der Anlage am Anschlag 79 völlig frei, so daß die Klappe 14 von Hand in die Reinigungsstellung hochgeschwenkt werden kann. Zweckmäßigerweise ist auch hier wiederum ein Anschlag 38 vorgesehen. Gleichzeitig entspannt sich die Feder 83 wieder und schiebt die Abschrägung 28a über den Eintrittsspalt 5a und die Schrägfläche 80 unter den Stift 76b, was den Druckknopf 76 wieder in seine Ausgangsstellung schiebt. Das Sperrglied 77 bleibt aber entspannt, so daß ein Verschwenken und Belasten des Überdruckventils in Arbeitsstellung nicht stattfinden kann.

Soll der Deckel 2 wieder in Kochstellung gebracht werden, so genügt es, daß der Kulissenstein 29 wieder in den Eintrittsspalt 5a eingeführt wird. Über die Abschrägung 28a der Eintrittsöffnung 28 wird der Riegel 81 gegen die Wirkung der Feder 83 derart verschoben, daß der Kulissenstein 29 in die Eintrittsöffnung 28 eintreten kann. Die abgeschrägte Oberfläche 29 des Kulissensteines 29 hebt die Abkröpfung 77a des Steuergliedes 77 wieder in die in Figur 13 gezeichnete Stellung an, in der über den Anschlag 79 die Klappe 14 wieder in Arbeitsstellung vorbelastet wird.

In Abwandlung der beschriebenen und gezeichneten Ausführungsbeispiele können die anhand der einzelnen Figuren beschriebenen und gezeichneten Einzelheiten untereinander ausgetauscht werden. So können z.B. die Rampenflächen 35 an allen gezeichneten Sperrteilen vorgesehen sein. Die Rampenflächen 35 können auch gleichzeitig oder alternativ mit der abgeschrägten Oberfläche 39 des Kulissensteines vorhanden sein. Die Führungsflächen für das Steuerglied können an jeder Stelle an der Klappe 14 angeordnet sein, solange eine Verschwenkbarkeit der Klappe 14 möglich ist. Die Führungsfläche im Ausführungsbeispiel nach den Figuren 5 bis 8 kann durchgehend angeordnet und mit ebenfalls zwei unterschiedlich geneigten Bereichen versehen sein. Der Ventilsitz im Deckel kann nicht nur eine einfache Öffnung sondern einer der aus dem Stand der Technik hinlänglich bekannten, ausgearbeiteten Ventilsitze sein, der formschlüssig mit einem Dichtungsteil am Ventilkörper zusammenwirkt. Die Abmessungen der Klappe, insbesondere der Abstand, den das Federwiderlager in Arbeitsstellung zum Deckel aufweist, richtet sich nach der Stärke der Feder des Überdruckventils und nach dem gewünschten Dampfdruck beim Kochen. Es ist weiterhin nicht unbedingt notwendig, den Ventilkörper zusammen mit der Klappe zu verschwenken. Vielmehr könnte z.B. der Ventilkörper ohne Kopf lose in der Führungsöffnung geführt und mit dem Deckel verbunden sein. Beim Verschwenken der Klappe in Abdampfstellung wird somit die Feder entlastet, so daß der Überdruck entweichen kann. In Reinigungsstellung ist die Klappe gänzlich vom Ventilkörper abgehoben, so daß das Überdruckventil zum Reinigen zugänglich ist. Obwohl die Unterbringung im hohlen Inneren einer Griffhälfte eine besonders einfache und platzsparende Möglichkeit ist, kann die Steuereinrichtung auch an jeder anderen Stelle des Deckels angeordnet sein.

**Patentansprüche**

1. Dampfdruckkochgefäß (1) mit einem Griff (4, 5), einem Deckel (2) und einem Überdruckventil (8), das einen Ventilsitz (7a) und einen Ventilkörper (9) aufweist, der in Richtung des Ventilsitzes (7a) durch eine sich an einem Federwiderlager (12) abstützenden Feder (11) belastbar ist, und mit einer Steuereinrichtung (16, 40, 48, 56, 72, 75) durch die der Ventilkörper (9) aus einer Arbeitsstellung, in der der Ventilkörper (9) an den Ventilsitz (7a) angedrückt wird, in eine Abdampfstellung, in der Ventilkörper (9) von der Kraft der Feder (11) so weit entlastet ist, daß Dampf entweichen kann, bringbar ist, und wobei der Ventilkörper in einer Reinigungsstellung vom Deckel (2) entfernbar ist, **dadurch gekennzeichnet,** daß das Federwiderlager (12) an einer verschwenkbaren Klappe (14, 68) angeordnet ist, an der der Ventilkörper (9) zumindest in seiner Arbeits- u.Abdampfstellung gelagert und geführt ist, und daß durch die Steuereinrichtung (16, 40, 48, 56, 72, 75) die Klappe (14, 68) zum Verstellen des Federwiderlagers (12) bei relativ zum Deckel (2) feststehendem Griff (4, 5) aus der Arbeitsstellung in die Abdampfstellung und in die Reinigungsstellung und zurück verschwenkbar ist, wobei in der Reinigungsstellung das Überdruckventil (8) frei zugänglich ist.

2. Dampfdruckkochgefäß nach Anspruch 1, dadurch **gekennzeichnet,** daß in der Reinigungsstellung der Ventilkörper (9) von dem am Deckel (2) angeordneten Ventilsitz (7) weggeschwenkt ist.

3. Dampfdruckkochgefäß nach Anspruch 1 oder 2, dadurch **gekennzeichnet,** daß die Steuereinrichtung (16, 40, 48, 56, 72, 75) ein die Klappe (14, 68) beaufschlagendes Steuerglied (19, 41, 49, 57, 73, 77) enthält, das durch ein vom Benutzer zu betätigendes Betätigungsmittel (18, 76) bewegbar ist.

4. Dampfdruckkochgefäß nach Anspruch 3, dadurch **gekennzeichnet,** daß das Betätigungsmittel ein mit dem Steuerglied (19, 41, 49, 57, 73) verbundener Schiebeknopf (18) ist.

5. Dampfdruckkochgefäß nach einem der Ansprüche 1 bis 4, dadurch **gekennzeichnet,** daß die Drehachse (13) der Klappe (14) an der der Steuereinrichtung (16, 40, 48, 56, 75) zugewandten Seite des Überdruckventils (8) angeordnet ist.

6. Dampfdruckkochgefäß nach einem der Ansprüche 1 bis 5, dadurch **gekennzeichnet,** daß die Klappe (14) eine Führungsfläche (24, 43, 50) aufweist, auf der das Steuerglied (19, 41, 49) quer zur Drehachse (13) der Klappe (14) verschiebbar geführt ist.

7. Dampfdruckkochgefäß nach Anspruch 6, dadurch **gekennzeichnet,** daß das Steuersglied (19, 41, 49) in seiner Anlage an der Führungsfläche (24, 43, 50) belastet ist.

8. Dampfdruckkochgefäß nach Anspruch 7, dadurch **gekennzeichnet,** daß das Steuerglied (19, 41, 49) federnd ausgebildet und in Richtung auf die Führungsfläche (24, 43, 50) vorgespannt ist.

9. Dampfdruckkochgefäß nach einem der Ansprüche 6 bis 8, dadurch **gekennzeichnet,** daß sich die Führungsfläche (24, 50) oberhalb der Drehachse (13) auf der dem Deckel (2) abgewandten Oberseite der Klappe (14) befindet.

10. Dampfdruckkochgefäß nach einem der Ansprüche 6 bis 9, dadurch **gekennzeichnet,** daß sich die Führungsfläche (24, 43, 50) bezüglich der Bewegungsrichtung des Schiebeknopfes (18) schräg nach oben erstreckt.

11. Dampfdruckkochgefäß nach einem der Ansprüche 6 bis 10 dadurch **gekennzeichnet,** daß ein sich im wesentlichen parallel zur Führungsfläche (24) erstreckender Schlitz (23) vorgesehen ist, in den eine am Steuerglied (19) angeordnete Nase (20) eingreift.

12. Dampfdruckkochgefäß nach Anspruch 11, dadurch **gekennzeichnet,** daß ein Ende des Schlitzes (23) einen Anschlagsteg (25) und die Nase (20) eine dem Anschlagsteg (25) angepaßte Ausnehmung (21) aufweist, die zumindest beim Übergang in die Reinigungsstellung den Anschlagsteg (25) mitnehmend übergreift.

13. Dampfdruckkochgefäß nach einem der Ansprüche 6 bis 8 , dadurch **gekennzeichnet,** daß sich die Führungsfläche (43) in Arbeitsstellung unterhalb der Drehachse (13) befindet.

14. Dampfdruckkochgefäß nach Anspruch 13, dadurch **gekennzeichnet,** daß das Steuerglied (41) einen Anlageabschnitt (41 d) aufweist, der zumindest beim Übergang in die Reinigungsstellung mit einem oberhalb der Drehachse (13) angeordneten Abschnitt der Klappe (14) in mitnehmenden Eingriff bringbar ist.

15. Dampfdruckkochgefäß nach einem der Ansprüche 13 oder 14, dadurch **gekennzeichnet,** daß das Steuerglied (41) beim Übergang von der Arbeitsstellung in die Abdampfstellung von der Führungsfläche (43) freikommt.

16. Dampfdruckkochgefäß nach einem der Ansprüche 6 bis 10, dadurch **gekennzeichnet,** daß die Klappe (14) durch eine Feder (51) in Richtung auf das auf der Führungsfläche (50) aufliegende Steuerglied (49) belastet ist.

17. Dampfdruckkochgefäß nach einem der Ansprüche 11,12 oder 16, dadurch **gekennzeichnet,** daß die Führungsfläche (24, 50) einen ersten, unter einem kleineren Winkel zur Bewegungsrichtung des Schiebeknopfes (18) und einen zweiten, unter einem größeren Winkel zur Bewegungsrichtung verlaufenden Abschnitt (24 a, 24 b, 50 a, 50 b) aufweist, wobei das Steuerglied (19, 49) in Arbeitsstellung in Anlage mit dem ersten Abschnitt (24 a, 50 a) steht.

18. Dampfdruckkochgefäß nach einem der Ansprüche 1 bis 5, dadurch **gekennzeichnet,** daß das Steuerglied (57) über ein im Abstand zur Drehachse (13) angeordnetes Gelenk (60) mit der Klappe (14) verbunden ist.

19. Dampfdruckkochgefäß nach Anspruch 18, dadurch **gekennzeichnet,** daß das Gelenk (60) an der dem Überdruckventil (8) abgewandten Seite der Drehachse (13) angeordnet ist.

20. Dampfdruckkochgefäß nach einem der Ansprüche 18 oder 19, dadurch **gekennzeichnet,** daß das Steuerglied (57) schwenkbar mit einem um das Gelenk (60) drehbaren Schwenkhebel (59) verbunden ist, wobei der Schwenkhebel (59) beim Übergang von der Arbeitsstellung in die Abdampfstellung über einen Totpunkt geführt ist.

21. Dampfdruckkochgefäß nach einem der Ansprüche 1 bis 4, dadurch **gekennzeichnet,** daß die Drehachse (69) der Klappe (68) an der der Steuereinrichtung (72) abgewandten Seite des Überdruckventils (8) angeordnet ist.

22. Dampfdruckkochgefäß nach Anspruch 21, dadurch **gekenzeichnet,** daß mindestens eine erste und eine zweite Klemmstufe (70, 71) und eine mit den Klemmstufen (70, 71) nacheinander in Eingriff bringbare Klemmfläche (74) vorgesehen sind, wobei bei Eingriff der Klemmfläche (74) mit der ersten Klemmstufe (70) das Überdruckventil (8) in Arbeitsstellung belastet ist, während sich das Überdruckventil (8) beim Eingriff der Klemmfläche (74) mit der zweiten Klemmstufe (71) in seiner Abdampfstellung befindet.

23. Dampfdruckkochgefäß nach Anspruch 22, dadurch **gekennzeichnet,** daß die Klemmstufen (70, 71) an der Klappe (68) und die Klemmfläche (74) am Steuerglied (73) angeordnet sind.

24. Dampfdruckkochgefäß nach Anspruch 1, bis 3 oder 5, dadurch **gekennzeichnet,** daß das Betätigungsmittel ein im wesentlichen senkrecht auf das Steuerglied (77) einwirkender Druckknopf (76) ist.

25. Dampfdruckkochgefäß nach Anspruch 24, dadurch **gekennzeichnet,** daß das Steuerglied (77) federnd ausgebildet und um die Drehachse (13) schwenkbar gelagert ist, sich mit seinem von der Drehachse (13) entfernten Ende auf einem Widerlager (29) abstützt und mit einem Anschlag (79) an der Klappe (14) zusammenwirkt.

26. Dampfdruckkochgefäß nach einem der Ansprüche 1 bis 25, dadurch **gekennzeichnet,** daß die Steuereinrichtung (16, 40, 48, 56, 72, 75) in einem Hohlraum in einer am Deckel (2) befestigten ersten Griffhälfte (5) untergebracht ist, wobei sich das Betätigungsmittel (18, 76) durch die Wandung des Griffes nach außen erstreckt.

27. Dampfdruckkochgefäß nach einem der Ansprüche 1 bis 26, dadurch **gekennzeichnet,** daß von der am Kochgefäß (3) angeordneten zweiten Griffhälfte (4) ein Kulissenstein (29) in Richtung auf die erste Griffhälfte (5) vorsteht und zum Verriegeln der beiden Griffhälften (4, 5) in der Arbeitsstellung in eine Nut (27) eingreift.

28. Dampfdruckkochgefäß nach Anspruch 27, dadurch **gekennzeichnet,** daß die Nut (27) im wesentlichen L-förmig ausgebildet und in einem vom Betätigungsmittel (18, 76) in und außer Verriegelungsstellung verschiebbaren Riegel (26, 45, 52, 63, 81) angeordnet ist.

29. Dampfdruckkochgefäß nach einem der Ansprüche 1 bis 28, dadurch **gekennzeichnet,** daß die Bewegung des Betätigungsmittels (18, 26) vor dem Übergang in die Reinigungsstellung durch einen Anschlag (27 a) gestoppt wird.

30. Dampfdruckkochgefäß nach Anspruch 28 und 29, dadurch **gekennzeichnet,** daß der Anschlag durch eine am Kulissenstein (29) anliegende Endfläche (27a) der L-förmigen Nut (27) gebildet ist.

31. Dampfdruckkochgefäß nach einem der Ansprüche 27 bis 30, dadurch **gekennzeichnet,** daß ein Sperrteil (31, 46, 53, 65, 77) vorgesehen ist, das das Andrücken des Ventilkörpers (9) an den Ventilsitz (7a) in die Arbeitsstellung nur erlaubt, wenn sich der Deckel (2) auf dem Kochgefäß (3) in einer zum Kochen vorbestimmten Lage befindet.

32. Dampfdruckkochgefäß nach Anspruch 31, dadurch **gekennzeichnet,** daß das Sperrteil (31, 46, 53, 65, 77) in Arbeitsstellung des Überdruckventils (8) auf dem Kulissenstein (29) ruht.

33. Dampfdruckkochgefäß nach einem der Ansprüche 31 und 32, dadurch **gekennzeichnet,** daß das Sperrteil (31, 46, 53 65, 77) während der Bewegung des Betätigungsmittels (18, 76) aus der Arbeitsstellung von seiner Auflage auf dem Kulissenstein (29) freikommt und nach unten in seine Sperrstellung bewegbar ist.

34. Dampfdruckkochgefäß nach einem der Ansprüche 31 bis 33, dadurch **gekennzeichnet,** daß das Sperrteil (53, 65) schwenkbar gelagert ist und durch sein Eigengewicht in die Sperrstellung fällt.

35. Dampfdruckkochgefäß nach einem der Ansprüche 31 bis 33, dadurch **gekennzeichnet,** daß das Sperrteil (31, 46, 77) federnd belastet ist.

36. Dampfdruckkochgefäß nach Anspruch 35, dadurch **gekennzeichnet,** daß das Sperrteil (31) durch das federnd ausgebildete Steuerglied (19) belastet ist.

37. Dampfdruckkochgefäß nach einem der Ansprüche 31 bis 33, dadurch **gekennzeichnet,** daß das Sperrteil (46, 77) als Feder ausgebildet ist.

38. Dampfdruckkochgefäß nach einem der Ansprüche 31 bis 37, dadurch **gekennzeichnet,** daß eine Rampenfläche (35, 39) zum Anheben des Sperrteiles (31, 46, 53, 65, 77) für den Eintritt des Kulissensteins (29) vorgesehen ist.

39. Dampfdruckkochgefäß nach Anspruch 38, dadurch **gekennzeichnet,** daß die Rampenfläche (39) am Kulissenstein angeordnet ist.

40. Dampfdruckkochgefäß nach einem der Ansprüche 38 oder 39, dadurch **gekennzeichnet,** daß die Rampenfläche (35) am Sperrteil (31, 46, 53, 65, 77) angeordnet ist.

41. Dampfdruckkochgefäß nach einem der Ansprüche 1 bis 40, dadurch **gekennzeichnet,** daß die Feder (11) des Überdruckventils (8) für unterschiedliche Ansprechdrücke vorspannbar ist.

## Claims

1. Pressure cooker (1) with a handle (4, 5), a lid (2) and a pressure relief valve (8) which comprises a valve seat (7a) and a valve body (9) which can be biassed in the direction of the valve seat (7a) by a spring (11) supported on a spring abutment (12), and with a control device (16, 40, 48, 56, 72, 75) by which the valve body (9) can be moved out of a working position in which the valve body (9) is biassed against the valve seat (7a), into a steam vent position in which the valve body (9) is released from the force of the spring (11) to such an extent that steam can escape, and wherein the valve body can be removed from the lid (2) in a cleaning position, characterised in that the spring abutment (12) is arranged on a pivotable flap (14, 68) on which the valve body (9) is mounted and guided at least in its working and steam vent positions, and that by the control device (16, 40, 48, 56, 72, 75) the flap (14, 68) can be pivoted out of the working position into the steam vent position and into the cleaning position and back to displace the spring abutment (12) when the handle (4, 5) is fixed relative to the lid (2), wherein the pressure relief valve (8) is freely accessible in the cleaning position.

2. Pressure cooker according to claim 1, characterised in that in the cleaning position the valve body (9) is pivoted away from the valve seat (7) arranged on the lid (2).

3. Pressure cooker according to claim 1 or 2, characterised in that the control device (16, 40, 48, 56, 72, 75) contains a control member (19, 41, 49, 57, 73, 77) which acts on the flap (14, 68) and which can be moved by an operating means (18, 76) to be operated by the user.

4. Pressure cooker according to claim 3, characterised in that the operating means is a sliding knob (18) connected to the control member (19, 41, 49, 57, 73).

5. Pressure cooker according to any of claims 1 to 4, characterised in that the axis of rotation (13) of the flap (14) is arranged on the side of the pressure relief valve (8) facing towards the control device (16, 40, 49, 56, 75).

6. Pressure cooker according to any of claims 1 to 5, characterised in that the flap (14) comprises a guide surface (24, 43, 50) on which the control member (19, 41, 49) is slidable transversely to the axis of rotation (13) of the flap (14).

7. Pressure cooker according to claim 6, characterised in that the control member (19, 41, 49) is biassed in contact with the guide surface (24, 43, 50).

8. Pressure cooker according to claim 7, characterised in that the control member (19, 41, 49) is of resilient construction and biassed in a direction towards the guide surface (24, 43, 50).

9. Pressure cooker according to any of claims 6 to 8, characterised in that the guide surface (24, 50) is located above the axis of rotation (13) on the upper side of the flap (14) facing away from the lid (2).

10. Pressure cooker according to any of claims 6 to 9, characterised in that the guide surface (24, 43, 50) extends obliquely upwards relative to the direction of movement of the sliding knob (18).

11. Pressure cooker according to any of claims 6 to 10, characterised in that there is provided a slot (23) which extends essentially parallel to the guide surface (24) and in which engages a lug (20) arranged on the control member (19).

12. Pressure cooker according to claim 11, characterised in that one end of the slot (23) comprises a stop web (25) and the lug (20) comprises a recess (21) which is adapted to the stop web (25) and which overlaps the stop web (25) in driving relationship at least on changing over to the cleaning position.

13. Pressure cooker according to any of claims 6 to 3, characterised in that the guide surface (43) is located beneath the axis of rotation (13) in the working position.

14. Pressure cooker according to claim 13, characterised in that the control member (41) comprises a contact section (41d) which can be brought into driving engagement with a section of toe flap (14) arranged above tile axis of rotation (13), at least on changing over into the cleaning position.

15. Pressure cooker according to either of claims 13 or 14, characterised in that the control member (41) is freed from the guide surface (43) on changing over from the working position to the steam vent position.

16. Pressure cooker according to any of claims 6 to 10, characterised in that the flap (14) is biassed by a spring (51) in a direction towards the control member (49) resting on the guide surface (50).

17. Pressure cooker according to any of claims 11, 12 or 16, characterised in that the guide surface (24, 50) comprises a first section (24a, 50a) extending at a smaller angle to the direction of movement of the sliding knob (18) and a second section (24b, 50b) extending at a larger angle to the direction of movement, wherein the control member (19, 49) is in contact with the first section (24a, 50a) in the working position.

18. Pressure cooker according to any of claims 1 to 5, characterised in that the control member (57) is connected to the flap (14) by a hinge (60) arranged at a distance from the axis of rotation (13).

19. Pressure cooker according to claim 18, characterised in that the hinge (60) is arranged on the side of the axis of rotation (13) facing away from the pressure relief valve (3).

20. Pressure cooker according to either of claims 18 or 19, characterised in that the control member (57) is pivotably connected to a pivot lever (59) rotatable about the hinge (60), wherein the pivot lever (59) is moved through a dead centre position on changing over from the working position to the steam vent position.

21. Pressure cooker according to any of claims 1 to 4, characterised in that the axis of rotation (69) of the flap (68) is arranged on the side of the pressure relief valve (8) facing away from the control device (72).

22. Pressure cooker according to claim 21, characterised in that at least one first and one second clamping step (70, 71) and a clamping surface (74) which can be brought into engagement with the clamping steps (70, 71) successively are provided, wherein on engagement of the clamping surface (74) with the first clamping step (70) the pressure relief valve (8) is biassed into the working position, while on engagement of the clamping surface (74) with the second clamping step (71) the pressure relief valve (8) is in its steam vent position.

23. Pressure cooker according to claim 22, characterised in that the clamping steps (70, 71) are arranged on the flap (68) and the clamping surface (74) is arranged on the control member (73).

24. Pressure cooker according to claims 1 to 3 or 5, characterised in that the operating means is a push button (76) acting essentially perpendicularly on the control member (77).

25. Pressure cooker according to claim 24, characterised in that the control member (77) is of resilient construction and mounted pivotably about the axis of rotation (13), is supported by its end remote from the axis of rotation (13) on an abutment (29), and cooperates with a stop (79) on the flap (14).

26. Pressure cooker according to any of claims 1 to 25, characterised in that the control device (16, 40, 48, 56, 72, 75) is accommodated in a cavity in a first handle half (5) attached to the lid (2), wherein the operating means (18, 76) extends outwardly through the wall of the handle.

27. Pressure cooker according to any of claims 1 to 26, characterised in that a sliding block (29) projects from the second handle half (4), which is arranged on the cooker vessel (3), in a direction towards the first handle half (5) and engages in a groove (27) to lock the two handle halves (4, 5) in the working position.

28. Pressure cooker according to claim 27, characterised in that the groove (27) is essentially L-shaped and arranged in a latch (26, 45, 52, 63, 81) displaceable into and out of the locking position by the operating means (18, 76).

29. Pressure cooker according to any of claims 1 to 28, characterised in that movement of the operating means (18, 26) is stopped by a stop (27a) before changing over to the cleaning position.

30. Pressure cooker according to claims 23 and 29, characterised in that the stop is formed by an end face (27a) of the L-shaped groove (27) abutting against the sliding block (29).

31. Pressure cooker according to any of claims 27 to 30, characterised in that a locking portion (31, 46, 53, 65, 77) is provided which allows the valve body (9) to be biassed against the valve seat (7a) in the working position only when the lid (2) is located on the cooker vessel (3) in a predefined position for cooking.

32. Pressure cooker according to claim 31, characterised in that the locking portion (31, 46, 53, 65, 77) rests on the sliding block (29) in the working position of the pressure relief valve (8).

33. Pressure cooker according to either of claims 31 and 32, characterised in that during movement of the operating means (18, 76) out of the working position, the locking portion (31, 46, 53, 65, 77) is freed from resting on the sliding block (29) and movable downwards into its locking position.

34. Pressure cooker according to any of claims 31 to 33, characterised in that the locking portion (53, 65) is mounted pivotably and drops by its own weight into the locking position.

35. Pressure cooker according to any of claims 31 to 33, characterised in that the locking portion (31, 46, 77) is spring-loaded.

36. Pressure cooker according to claim 35, characterised in that the locking portion (31) is loaded by the resiliently constructed control member (19).

37. Pressure cooker according to any of claims 31 to 33, characterised in that the locking portion (46, 77) is constructed as a spring.

38. Pressure cooker according to any of claims 31 to 37, characterised in that a ramp surface (35, 39) is provided for lifting the locking portion (31, 46, 53, 65, 77) for entry of the sliding block (29).

39. Pressure cooker according to claim 38, characterised in that the ramp surface (39) is arranged on the sliding block.

40. Pressure cooker according to either of claims 38 or 39, characterised in that the ramp surface (35) is arranged on the locking portion (31, 46, 53, 65, 77).

41. Pressure cooker according to any of claims 1 to 40, characterised in that the spring (11) of the pressure relief valve (8) can be biassed for different minimum pressures of response.

**Revendications**

1. Cuiseur (1) sous pression, comprenant une poignée (4, 5) ; un couvercle (2) et une soupape de surpression (8) munie d'un siège (7a) et d'un corps obturateur (9) pouvant être chargé, en direction du siège (7a) de la soupape, par un ressort (11) prenant appui sur une contre-butée (12) ; ainsi qu'un dispositif de commande (16, 40, 48, 56, 72, 75) par l'intermédiaire duquel le corps obturateur (9) peut être amené, d'une position de travail dans laquelle ce corps obturateur (9) est appliqué contre le siège (7a) de la soupape, à une position d'échappement de vapeur dans laquelle le corps obturateur (9) est soulagé, de la force du ressort (11), de telle sorte que de la vapeur puisse s'échapper, et ledit corps obturateur pouvant être dissocié du couvercle (2) dans une position de nettoyage, caractérisé par le fait que la contre-butée (12) du ressort est disposée sur un volet pivotant (14, 68) sur lequel le corps obturateur (9) est monté et guidé, au moins dans ses positions respectives de travail et d'échappement de vapeur ; et par le fait que, en vue de régler la contre-butée (12) du ressort lorsque la poignée (4, 5) est fixe par rapport au couvercle (2), le dispositif de commande (16, 40, 48, 56, 72, 75) peut imprimer un pivotement au volet (14, 68) de la position de travail à la position d'échappement de vapeur et à la position de nettoyage, et inversement, la soupape de surpression (8) étant librement accessible dans la position de nettoyage.

2. Cuiseur sous pression selon la revendication 1, caractérisé par le fait que le corps obturateur (9) est écarté par pivotement, dans la position de nettoyage, du siège (7a) de la soupape situé sur le couvercle (2).

3. Cuiseur sous pression selon la revendication 1 ou 2, caractérisé par le fait que le dispositif de commande (16, 40, 48, 56, 72, 75) renferme un organe de commande (19, 41, 49, 57, 73, 77) qui agit sur le volet (14, 68), et auquel un mouvement peut être imprimé par un moyen d'actionnement (18, 76) devant être manoeuvré par l'utilisateur.

4. Cuiseur sous pression selon la revendication 3, caractérisé par le fait que le moyen d'actionnement est un curseur (18) relié à l'organe de commande (19, 41, 49, 57, 73).

5. Cuiseur sous pression selon l'une des revendications 1 à 4, caractérisé par le fait que l'axe de rotation (13) du volet (14) se trouve sur le côté de la soupape de surpression (8) qui est tourné vers le dispositif de commande (16, 40, 48, 56, 75).

6. Cuiseur sous pression selon l'une des revendications 1 à 5, caractérisé par le fait que le volet (14) présente une surface de guidage (24, 43, 50) sur laquelle l'organe de commande (19, 41, 49) est guidé à coulissement, transversalement par rapport à l'axe de rotation (13) du volet (14).

7. Cuiseur sous pression selon la revendication 6, caractérisé par le fait que l'organe de commande (19, 41, 49) est chargé pour venir s'appliquer contre la surface de guidage (24, 43, 50).

8. Cuiseur sous pression selon la revendication 7, caractérisé par le fait que l'organe de commande (19, 41, 49) est réalisé doué d'élasticité, et est préchargé en direction de la surface de guidage (24, 43, 50).

9. Cuiseur sous pression selon l'une des revendications 6 à 8, caractérisé par le fait que la surface de guidage (24, 50) se trouve au-dessus de l'axe de rotation (13), sur la face supérieure du volet (14) qui est tournée à l'opposé du couvercle (2).

10. Cuiseur sous pression selon l'une des revendications 6 à 9, caractérisé par le fait que la surface de guidage (24, 43, 50) s'étend à l'oblique vers le haut par rapport à la direction de mouvement du curseur (18).

11. Cuiseur sous pression selon l'une des revendications 6 à 10, caractérisé par le fait qu'il est prévu une fente (23) s'étendant, pour l'essentiel, parallèlement à la surface de guidage (24), et dans laquelle s'engage un mentonnet (20) situé sur l'organe de commande (19).

12. Cuiseur sous pression selon la revendication 11, caractérisé par le fait qu'une extrémité de la fente (23) présente une nervure de butée (25), et le mentonnet (20) comporte un évidement (21) qui est adapté à la nervure de butée (25) et vient coiffer cette nervure de butée (25), avec effet d'entraînement, au moins lors du passage à la position de nettoyage.

13. Cuiseur sous pression selon l'une des revendications 6 à 8, caractérisé par le fait que la surface de guidage (43) se trouve, en position de travail, au-dessous de l'axe de rotation (13).

14. Cuiseur sous pression selon la revendication 13, caractérisé par le fait que l'organe de commande (41) présente une zone de contact (41d) qui, au moins lors du passage à la position de nettoyage, peut être mise en prise d'entraînement avec une zone du volet (14) située au-dessus de l'axe de rotation (13).

15. Cuiseur sous pression selon l'une des revendications 13 ou 14, caractérisé par le fait que l'organe de commande (41) se dégage de la surface de guidage (43) lors du passage de la position de travail à la position d'échappement de vapeur.

16. Cuiseur sous pression selon l'une des revendications 6 à 10, caractérisé par le fait que le volet (14) est chargé, par un ressort (51), en direction de l'organe de commande (49) appliqué sur la surface de guidage (50).

17. Cuiseur sous pression selon l'une des revendications 11, 12 ou 16, caractérisé par le fait que la surface de guidage (24, 50) comprend des première et seconde zones (24a, 24b, 50a, 50b) s'étendant, respectivement, selon un angle plus petit par rapport à la direction de mouvement du curseur (18) et selon un angle plus grand par rapport à la direction de mouvement, l'organe de commande (19, 49) étant en contact avec la première zone (24a, 50a) dans la position de travail.

18. Cuiseur sous pression selon l'une des revendications 1 à 5, caractérisé par le fait que l'organe de commande (57) est relié au volet (14) par l'intermédiaire d'une articulation (60) située à distance de l'axe de rotation (13).

19. Cuiseur sous pression selon la revendication 18, caractérisé par le fait que l'articulation (60) est disposée du côté de l'axe de rotation (13) qui est tourné à l'opposé de la soupape de surpression (8).

20. Cuiseur sous pression selon l'une des revendications 18 ou 19, caractérisé par le fait que l'organe de commande (57) est relié, avec faculté de pivotement, à un levier pivotant (59) pouvant tourner autour de l'articulation (60), le levier pivotant (59) transitant par un point mort lors du passage de la position de travail à la position d'échappement de vapeur.

21. Cuiseur sous pression selon l'une des revendications 1 à 4, caractérisé par le fait que l'axe de rotation (69) du volet (68) est situé du côté de la soupape de surpression (8) qui est tourné à l'opposé du dispositif de commande (72).

22. Cuiseur sous pression selon la revendication 21, caractérisé par la présence, au minimum, de premier et second décrochements de coincement (70, 71) et d'une surface de coincement (74) pouvant être mise en prise, successivement, avec lesdits décrochements de coincement (70, 71), la soupape de surpression (8) étant sollicitée vers la position de travail lorsque la surface de coincement (74) vient en prise avec le premier décrochement de coincement (70), pendant que la soupape de surpression (8) occupe sa position d'échappement de vapeur lorsque la surface de coincement (74) vient en prise avec le second décrochement de coincement (71).

23. Cuiseur sous pression selon la revendication 22, caractérisé par le fait que les décrochements de coincement (70, 71) sont ménagés sur le volet (68), et la surface de coincement (74) est ménagée sur l'organe de commande (73).

24. Cuiseur sous pression selon les revendications 1 à 3 ou 5, caractérisé par le fait que le moyen d'actionnement est un bouton-poussoir (76) agissant, pour l'essentiel, perpendiculairement sur l'organe de commande (77).

25. Cuiseur sous pression selon la revendication 24, caractérisé par le fait que l'organe de commande (77) est réalisé doué d'élasticité et est monté pivotant autour de l'axe de rotation (13) ; est en appui sur une contre-butée (29) par son extrémité éloignée de l'axe de rotation (13) ; et coopère avec un arrêt (79) solidaire du volet (14).

26. Cuiseur sous pression selon l'une des revendications 1 à 25, caractérisé par le fait que le dispositif de commande (16, 40, 48, 56, 72, 75) est logé à l'intérieur d'une cavité, dans une première demi-poignée (5) fixée au couvercle (2), le moyen d'actionnement (18, 76) s'étendant vers l'extérieur en traversant la paroi de la poignée.

27. Cuiseur sous pression selon l'une des revendications 1 à 26, caractérisé par le fait qu'un patin coulissant (29), saillant en direction de la première demi-poignée (5) à partir de la seconde demi-poignée (4) disposée sur le récipient de cuisson (3), pénètre dans une rainure (27) en vue de verrouiller les deux demi-poignées (4, 5) dans la position de travail.

28. Cuiseur sous pression selon la revendication 27, caractérisé par le fait que la rainure (27) est configurée sensiblement en L, et est ménagée dans une targette (26, 45, 52, 63, 81) à laquelle le moyen d'actionnement (18, 76) peut imprimer un coulissement pour la mettre en et hors prise de verrouillage.

29. Cuiseur sous pression selon l'une des revendications 1 à 28, caractérisé par le fait que le mouvement du moyen d'actionnement (18, 76) est arrêté, par une butée (27a), avant le passage à la position de nettoyage.

30. Cuiseur sous pression selon les revendications 28 et 29, caractérisé par le fait que la butée est formée par une surface extrême (27a), appliquée contre le patin coulissant (29), de la rainure (27) configurée en L.

31. Cuiseur sous pression selon l'une des revendications 27 à 30, caractérisé par le fait qu'il est prévu une partie de blocage (31, 46, 53, 65, 77) qui permet au corps obturateur (9) de s'appliquer contre le siège (7a) de la soupape, jusqu'à la position de travail, uniquement lorsque le couvercle (2) occupe, sur le récipient de cuisson (3), une position prédéterminée pour la cuisson.

32. Cuiseur sous pression selon la revendication 31, caractérisé par le fait que la partie de blocage (31, 46, 53, 65, 77) repose sur le patin coulissant (29) dans la position de travail de la soupape de surpression (8).

33. Cuiseur sous pression selon l'une des revendications 31 et 32, caractérisé par le fait que la partie de blocage (31, 46, 53, 65, 77) est libérée de son contact avec le patin coulissant (29) au cours du mouvement du moyen d'actionnement (18, 76) à l'écart de la position de travail, et peut être déplacée vers le bas jusqu'à sa position de blocage.

34. Cuiseur sous pression selon l'une des revendications 31 à 33, caractérisé par le fait que la partie de blocage (53, 65) est montée à pivotement, et tombe à la position de blocage sous l'effet de son propre poids.

35. Cuiseur sous pression selon l'une des revendications 31 à 33, caractérisé par le fait que la partie de blocage (31, 46, 77) est chargée élastiquement.

36. Cuiseur sous pression selon la revendication 35, caractérisé par le fait que la partie de blocage (31) est chargée par l'intermédiaire de l'organe de commande (19) réalisé doué d'élasticité.

37. Cuiseur sous pression selon l'une des revendications 31 à 33, caractérisé par le fait que la partie de blocage (46, 77) est réalisée sous la forme d'un ressort.

38. Cuiseur sous pression selon l'une des revendications 31 à 37, caractérisé par le fait qu'une surface inclinée (35, 39) est prévue pour soulever la partie de blocage (31, 46, 53, 65, 77), en vue de la pénétration du patin coulissant (29).

39. Cuiseur sous pression selon la revendication 38, caractérisé par le fait que la surface inclinée (39) est ménagée sur le patin coulissant.

40. Cuiseur sous pression selon l'une des revendications 38 ou 39, caractérisé par le fait que la surface inclinée (35) est ménagée sur la partie de blocage (31, 46, 53, 65, 77).

41. Cuiseur sous pression selon l'une des revendications 1 à 40, caractérisé par le fait que le ressort (11) de la soupape de surpression (8) peut être préchargé pour réagir à des pressions de réponse différentes.

Fig. 1

Fig. 1A

Fig. 2

Fig. 2A

Fig. 3

Fig.3A

Fig. 4

Fig. 9

Fig. 5

Fig. 5A

Fig. 6

Fig. 6A

Fig. 7

Fig. 7A

Fig. 8

Fig. 10

Fig.10A    Fig. 10 B

Fig.10C

Fig. 11

Fig.11A

Fig.11B

Fig.11C

69  68  12  8  11  74  73  44  18  44  72  5

Fig. 12

70  71  65  29  27  63  63a

2  4

Fig.12A  27  63  63a  Fig.12B

67a

65  Fig.12C

EP 0 281 646 B1

Fig. 13

Fig. 13 A

EP 0 281 646 B1